# EUROPEAN PATENT APPLICATION

(11) **EP 4 752 051 A1**
(43) Date of publication of application: **03.06.2026**
(21) Application number: 23946725.1
(22) Date of filing: 27.07.2023
(51) Int. Cl.: B64C 21/10

(54) **MOVING BODY, SHEET MEMBER, AND MANUFACTURING DEVICE**

(71) Applicant: NIKON CORPORATION, Tokyo 140-8601 (JP)
(72) Inventor: ICHINOSE, Go, Tokyo 140-8601 (JP); YUITO, Takashi, Tokyo 140-8601 (JP)
(74) Representative: Hoffmann Eitle
(86) International application number: PCT/JP2023/027576
(87) International publication number: WO 2025/022645

(57) **Abstract**

A movable body is movable in fluid, a surface of the movable body includes: a first surface to which a first sheet member, on which a first riblet structure is formed, is attached; and a second surface to which a second sheet member, on which a second riblet structure is formed, is attached, and a characteristic of the first riblet structure is different from a characteristic of the second riblet structure.

## Description

### Technical Field

The present invention relates to a technical field of a sheet member on a surface of which a riblet structure is formed, a movable body on which the sheet member is attached, and a mold for performing an imprint lithography of the sheet member, for example.

### Background Art

A Patent literature 1 discloses an aircraft including an airframe on a surface of which a riblet structure is formed. In this case, it is required to effectively achieve a performance of the riblet structure.

### Citation List

### Patent Literature

Patent Literature 1: US2014/0144255A1

### Summary of Invention

A first aspect provides a movable body that is movable in fluid, wherein a surface of the movable body includes: a first surface to which a first sheet member, on which a first riblet structure is formed, is attached; and a second surface to which a second sheet member, on which a second riblet structure is formed, is attached, and a characteristic of the first riblet structure is different from a characteristic of the second riblet structure.

A second aspect provides a sheet member, wherein a surface of the sheet member includes: a first surface on which a first riblet structure is formed; and a second surface on which a second riblet structure is formed, and a characteristic of the first riblet structure is different from a characteristic of the second riblet structure.

A third aspect provides a movable body that is movable in fluid, wherein the sheet member provided by the second aspect is attached to at least a part of a surface of the movable body.

A fourth aspect provides a movable body that is movable in fluid, wherein a plurality of sheet members provided by the second aspect are attached to at least a part of a surface of the movable body.

A fifth aspect provides a manufacturing apparatus for manufacturing the sheet member provided by the second aspect.

A sixth aspect provides a movable body that is movable in fluid, wherein a surface of the movable body includes: a first surface to which a first sheet member, on which a first structure is formed, is attached; and a second surface to which a second sheet member, on which a second structure is formed, is attached, and a characteristic of the first structure is different from a characteristic of the second structure.

A seventh aspect provides a sheet member, wherein a surface of the sheet member includes: a first surface on which a first structure is formed; and a second surface on which a second structure is formed, and a characteristic of the first structure is different from a characteristic of the second structure.

An eighth aspect provides a movable body that is movable in fluid, wherein
the sheet member provided by the seventh aspect is attached to at least a part of a surface of the movable body.

A ninth aspect provides a movable body that is movable in fluid, wherein
a plurality of sheet members provided by the seventh aspect are attached to at least a part of a surface of the movable body.

A tenth aspect provides a manufacturing apparatus for manufacturing the sheet member provided by the seventh aspect.

### Brief Description of Drawings

[FIG. 1] FIG. 1(a) is a perspective view that illustrates an external appearance of a riblet sheet in a present example embodiment, and FIG. 1(b) is a cross-sectional view (I-I' cross-sectional view in FIG. 1(a)) that illustrates a structure of the riblet sheet in the present example embodiment.
[FIG. 2] FIG. 2(a) is a perspective view that illustrates a riblet structure, FIG. 2(b) is a cross-sectional view (II-II' cross-sectional view in FIG. 2(a)) that illustrates the riblet structure, and FIG. 2(c) is a top view that illustrates the riblet structure.
[FIG. 3] FIG. 3(a) is a front view that illustrates an aircraft that is one example of an object to which the riblet sheet is attached, and FIG. 3(b) is a side view that illustrates the aircraft that is one example of the object to which the riblet sheet is attached.
[FIG. 4] FIG. 4 is a side view that illustrates the aircraft (especially, a fuselage of the aircraft) that is one example of the object to which the riblet sheet is attached.
[FIG. 5] Each of FIG. 5(a) to FIG. 5(c) illustrates a convex structure that is formed on a riblet sheet attached to the object.
[FIG. 6] FIG. 6 is a plan view that illustrates a shape (especially, a shape in a planar view) of the riblet sheet.
[FIG. 7] FIG. 7 is a plan view that illustrates a riblet sheet in a second example embodiment.
[FIG. 8] Each of FIG. 8(a) to FIG. 8(c) illustrates a convex structure that is formed on the riblet sheet in the second example embodiment.
[FIG. 9] Each of FIG. 9(a) to FIG. 9(d) is a plan view that illustrates an arrangement pattern of a plurality of partial structure surface in the riblet sheet in the second example embodiment.
[FIG. 10] FIG. 10 is a cross-sectional view that schematically illustrates a configuration of a manufacturing apparatus (a processing apparatus) that manufactures the riblet sheet.
[FIG. 11] FIG. 11 is a system configuration diagram that illustrates a system configuration of the manufacturing apparatus (the processing apparatus) that manufactures the riblet sheet.
[FIG. 12] FIG. 12 is a perspective view that schematically illustrates a configuration of a manufacturing apparatus (a first imprint lithography apparatus) that manufactures the riblet sheet.
[FIG. 13] FIG. 12 is a perspective view that schematically illustrates a configuration of a manufacturing apparatus (a second imprint lithography apparatus) that manufactures the riblet sheet.

### Description of Example embodiments

Next, with reference to drawings, an example embodiment of a movable body, a sheet member, and a manufacturing apparatus will be described.

### (1) Riblet Sheet 1 in First Example Embodiment

First, a riblet sheet 1 in a first example embodiment will be described. Note that the riblet sheet 1 in the first example embodiment is referred to as a riblet sheet 1a in the below-described description.

### (1-1) Structure of Riblet Sheet 1a

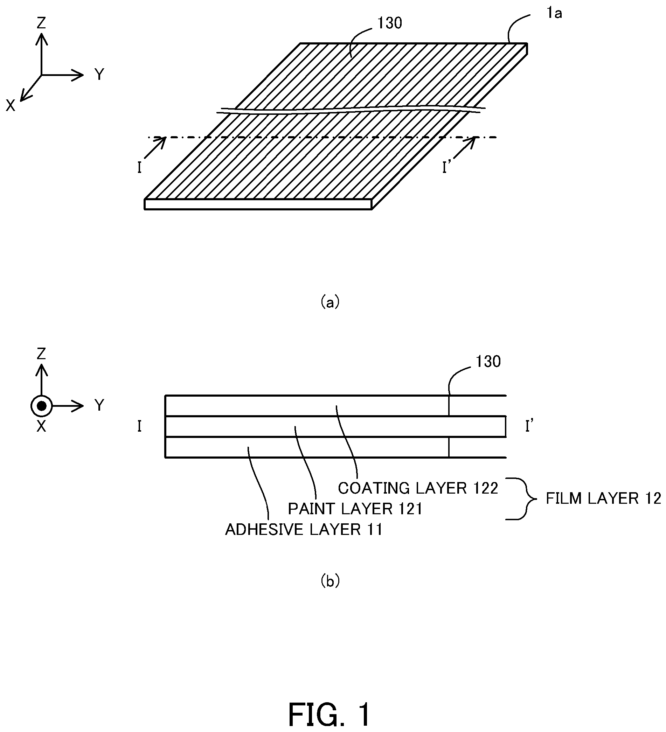

First, with reference to FIG. 1(a) to FIG. 1(b), a structure of the riblet sheet 1a will be described. FIG. 1(a) is a perspective view that illustrates an external appearance of the riblet sheet 1a in the first example embodiment, and FIG. 1(b) is a cross-sectional view (I-I' cross-sectional view in FIG. 1(a)) that illustrates the structure of the riblet sheet 1a in the first example embodiment.

As illustrated in FIG. 1(a) and FIG. 1(b), the riblet sheet 1a is sheet member. The sheet member may be a film-like, sheet-like, layered-like, foil-like, tape-like, or band-like member. Note that the sheet member may be referred to as a film member. In the example illustrated in FIG. 1(a) and FIG. 1(b), a Y-axis direction corresponds to a width direction of the riblet sheet 1a, and a Z-axis direction corresponds to a thickness direction of the riblet sheet 1a. The riblet sheet 1a is a sheet member in which a thickness of the riblet sheet 1a is much less than a width of the riblet sheet 1. As one example, the width of the riblet sheet 1a may be equal to or wider than several centimeters, may be equal to or wider than ten centimeters, may be equal to or wider than several tens of centimeters, or may be equal to or wider than one meter. On the other hand, the thickness of the riblet sheet 1a may be equal to or thinner than one millimeter, may be equal to or thinner than one centimeter, or may be equal to or thinner than several centimeters.

The riblet sheet 1a has a longitudinal shape extending along a length direction that intersects the width direction and the thickness direction. In other words, the riblet sheet 1a has a longitudinal shape in which a direction intersecting the width direction and the thickness direction is the longitudinal direction. In the example illustrated in FIG. 1(a) and FIG. 1(b), a X-axis direction is the length direction (the longitudinal direction) of the riblet sheet 1a. As one example, the length of the riblet sheet 1a may be equal to or longer than several centimeters, may be equal to or longer than several tens of centimeters, may be equal to or longer than several tens of centimeters, may be equal to or longer than one meter, may be equal to or longer than ten meters, or may be equal to or longer than several tens of meters.

However, the riblet sheet 1a may not have the longitudinal shape extending along the length direction that intersects the width direction and thickness direction. The longitudinal direction of the riblet sheet 1a may be the width direction. Furthermore, the riblet sheet 1a may have a rectangular shape in a planar viewed. As one example, the riblet sheet 1a extending along the length direction may be divided into a plurality of sheet members, each of which has a rectangular shape, along the length direction. Moreover, the riblet sheet 1a may have a square shape in a planar view. As one example, the riblet sheet 1a extending along the length direction may be divided into a plurality of sheet members, each of which has a square shape, along the length direction.

As illustrated in FIG. 1(b), the riblet sheet 1a includes an adhesive layer 11 and a film layer 12.

The adhesive layer 11 is a layer containing an adhesive material for attaching the film layer 12 to an object OBJ (for example, a movable body described later). Therefore, the riblet sheet 1a may be attached to the object OBJ through the adhesive layer 11. Note that the riblet sheet 1a may not include the adhesive layer 11. In this case, an operator may apply an adhesive material between the object OBJ and the riblet sheet 1a to attach the riblet sheet 1a to the object OBJ.

The film layer 12 is a layer having a predetermined function. In the example illustrated in FIG. 1(b), the film layer 12 includes a paint layer 121 and a coating layer 122. The paint layer 121 is a layer containing paint of a predetermined color. The coating layer 122 is a layer that protects a surface of the paint layer 121. Note that the coating layer 122 may include a clear layer that is transparent in a visible light bandwidth. However, the film layer 12 may not include at least one of the paint layer 121 and the coating layer 122. The film layer 12 may contain a layer that is different from at least one of the paint layer 121 and the coating layer 122. For example, the film layer 12 may include an anti-reflection layer that prevents light reflection at a surface of the coating layer 12. The film layer 12 may include an anti-glare layer that reduces a glossiness of the surface of the coating layer 12. Alternatively, the coating layer 122 may serve as at least one of the anti-reflection layer and the anti-glare layer.

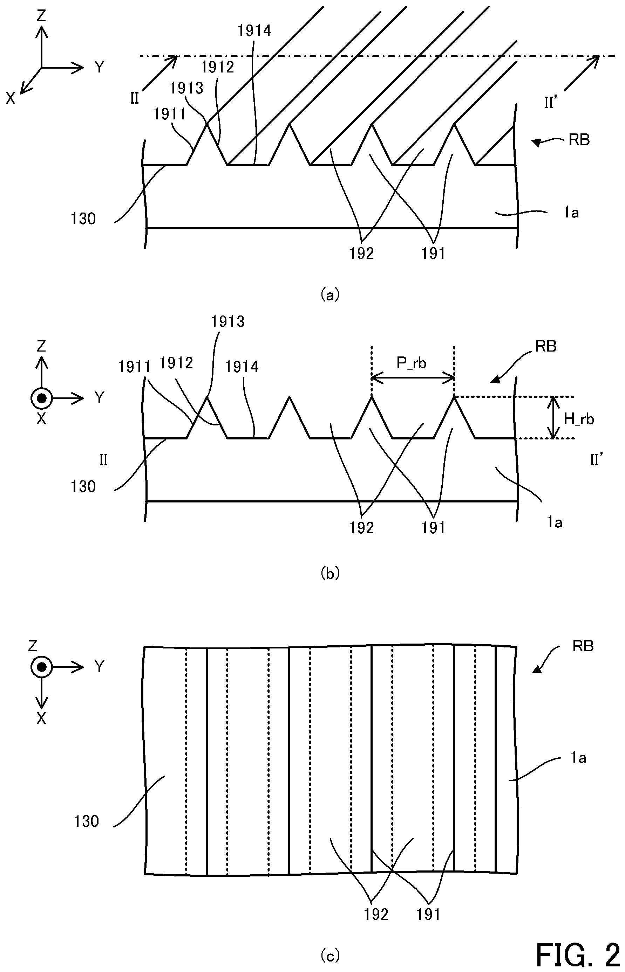

A riblet structure RB is formed on a surface of the riblet sheet 1a. However, in FIG. 1(a) and FIG. 1(b), the riblet structure RB formed on the surface of the riblet sheet 1a is omitted for simplicity of drawing. The riblet structure RB formed on the surface of the riblet sheet 1a will be described in detail later with reference to FIG. 2(a) to FIG. 2(c). Note that the surface of the riblet sheet 1a on which the riblet structure RB is formed is referred to as a "riblet structure surface 130" in the below-described description. FIG. 1(a) and FIG. 1(b) illustrate an example in which the surface of the film layer 12 is the riblet structure surface 130. Namely, FIG. 1(a) and FIG. 1(b) illustrate an example in which the riblet structure RB is formed on the surface of the film layer 12.

One example of the riblet structure RB is illustrated in FIG. 2(a) to FIG. 2(c). FIG. 2(a) is a perspective view that illustrates the riblet structure RB, FIG. 2(b) is a cross-sectional view (II-II' cross-sectional view in FIG. 2(a)) that illustrates the riblet structure RB, and FIG. 2(c) is a top view that illustrates the riblet structure RB.

As illustrated in FIG. 2(a) to FIG. 2(c), the riblet structure RB may include a plurality of convex structures 191. Each of the plurality of convex structures 191 may extend along a predetermined extension direction. In this case, the riblet structure RB may include the plurality of convex structures 191 extending along the predetermined extension direction. Each of the plurality of convex structures 191 may be arranged along a predetermined arrangement direction. In this case, the riblet structure RB may include the plurality of convex structures 191 arranged along the predetermined arrangement direction.

As one example, the riblet structure RB may include a structure in which the plurality of convex structures 191, each of which extends along the predetermined extension direction, are arranged along the predetermined arrangement direction that intersects the predetermined extension direction. Namely, the riblet structure RB may include a structure in which the plurality of convex structures 191, each of which is formed to extend along the predetermined extension direction, are arranged along the predetermined arrangement direction that intersects the predetermined extension direction. Each of the extension direction and the arrangement direction may be a direction that intersects a below-described height direction along which the convex structure 191 protrudes. Moreover, one of the extension direction and the arrangement direction may be the longitudinal direction of the riblet sheet 1a, and the other one of the extension direction and the arrangement direction may be a transverse direction of the riblet sheet 1a. In the example illustrated in FIG. 2(a) to FIG. 2(c), the riblet structure RB includes a structure in which the plurality of convex structures 191, each of which extends along a X-axis direction that is the longitudinal direction (the length direction) of the riblet sheet 1a, are arranged along a Y-axis direction that is the width direction of the riblet sheet 1a. Namely, FIG. 2(a) to FIG. 2(c) illustrate an example in which the predetermined extension direction is the X-axis direction and the predetermined arrangement direction is the Y-axis direction that intersects (typically, is orthogonal to) the X-axis direction.

The convex structure 191 is a structure that protrudes from a surrounding area along the predetermined height direction. The convex structure 191 is a structure that protrudes from the surrounding area along predetermined height direction that intersects both the predetermined extension direction, along which the convex structure 191 extends, and the predetermined arrangement direction, along which the convex structures 191 are arranged. Note that the height direction may be the thickness direction of the riblet sheet 1a. In the example illustrated in FIG. 2(a) to FIG. 2(c), the convex structure 191 is a structure that protrudes from the surrounding area along a Z-axis direction that is the thickness direction of the riblet sheet 1a. Namely, FIG. 2(a) to FIG. 2(c) illustrates an example in which the predetermined height direction is the Z-axis direction that intersects (typically, is orthogonal to) the X-axis direction and the Y-axis direction. Note that the convex structure 191 may include a protrusion-shaped structure that projects against the surrounding area. The convex structure 191 may include a convex-shaped structure that is convex with respect to the surrounding area. The convex structure 191 may include a mountain-shaped structure that is a peak relative to the surrounding area.

The convex structure 191 includes a pair of side surfaces 1911 and 192 that face in directions opposite to each other, respectively, for example. Note that a "state in which one surface and other surface face in the direction opposite to each other" in the first example embodiment may mean a state in which one surface faces toward one side of an axis, which intersects the one surface and the other surface, and the other surface faces toward other side (namely, an opposite side) of the same axis. In the example illustrated in FIG. 2(a) to FIG. 2(c), the convex structure 191 includes a side surface 1911 facing the -Y side and the side surface 1912 facing the +Y side. Each of the pair of side surfaces 1911 and 192 is a planar surface. However, at least one of the pair of side surfaces 1911 and 192 may include a curved surface.

The pair of side surfaces 1911 and 192 may be non-parallel to each other. In this case, the pair of side surfaces 1911 and 192 of the convex structure 191 may be connected to each other through one end parts (upper end parts at the +Z side in the example illustrated in FIG. 2(a) to FIG. 2(c)) thereof. Apart at which the pair of side surfaces 1911 and 192 of the convex structure 191 are connected forms a corner part 1913 of the convex structure 191. The corner part 1913 of the convex structure 191 may form a vertex of the convex structure 191. The corner part 1913 of the convex structure 191 may form a ridge line of the convex structure 191. The corner part 1913 of the convex structure 191 may form a boundary part of the pair of side surfaces 1911 and 192 of the convex structure 191. In this case, the pair of side surfaces 1911 and 192 may be considered to be connected to each other through the corner part 1913 of the convex structure 191. In the examples illustrated in FIG. 2(a) to FIG. 2(c), the pair of side surfaces 1911 and 192 are connected so that the upper end part of the side surface 1911 contacts the upper end part of the side surface 1912.

The convex structure 191 may be a structure that is formed by the pair of side surfaces 1911 and 192. The convex structure 191 may be a structure whose surface includes the pair of side surfaces 1911 and 192. In this case, a shape of a cross-section of the convex structure 191 including the Z-axis may be a triangular shape. In this case, the shape of the cross-section of the convex structure 191 including the Z-axis may be a symmetrical triangular shape, or may be an asymmetrical triangular shape. However, the shape of the cross-section of the convex structure 191 including the Z-axis may be any shape that is different from the triangular shape.

Note that the side surfaces 1911 and 192 may be referred to as inclined surfaces 1911 and 192, respectively. The riblet structure surface 130 may be considered to include the side surfaces 1911 and 192. Moreover, in a case where the corner part 1913 (the vertex or the ridge line) of the convex structure 191 is not a corner but a curved surface (a convex surface), the front surface 121 of the film layer 12 may be considered to include the corner part 1913.

A groove structure 192 that is recessed relative to an surrounding area is formed between adjacent convex structures 191. Therefore, the riblet structure RB may include a structure in which a plurality of groove structures 192, each of which extends along the predetermined extension direction, are arranged along the predetermined arrangement direction. Namely, the riblet structure RB may include a structure in which the plurality of groove structures 192, each of which is formed to extend along the predetermined extension direction, are arranged along the predetermined arrangement direction. Note that the groove structure 192 may be regarded as a structure that is recessed with respect to the vertex or the ridge line (for example, the corner part 1913 described above) of the convex structure 191.

The groove structure 192 may be regarded as a structure that is positioned between the side surface 1911 of one convex structure 191 and the side surface 1912 of another convex structure 191 that is adjacent to the one convex structure 191 along the arrangement direction along which the convex structures 191 are arranged. Specifically, the side surface 1911 of one convex structure 191 and the side surface 1912 of another convex structure 191, which is adjacent to the one convex structure 191 along the arrangement direction along which the convex structures 191 are arranged, may be connected through a boundary part 1914 that connects other end parts thereof (lower end parts at the -Z side in the example illustrated in FIG. 2(a) to FIG. 2(c)). Namely, the side surfaces 1911 and 192, which face each other, of two adjacent convex structures 191 may be connected through the boundary part 1914 that forms a boundary between the two adjacent convex structures 191. In the example illustrated in FIG. 2(a) to FIG. 2(c), the boundary part 1914 includes a surface that intersects each of the side surfaces 1911 and 192 that are connected by the boundary part 1914. In this case, the groove structure 192 may be a structure that is formed by the boundary part 1914. The groove structure 192 may be a structure that includes a groove facing the boundary part 1914. The boundary part 1914 may be regarded as a bottom surface of the groove structure 192. In this case, a boundary between the boundary part 1914 and each of the side surfaces 1911 and 192 may be used as a boundary between the convex structure 191 and the groove structure 192. Note that the groove structure 192 may be referred to as a groove-shaped structure or a concave structure.

However, in some cases, the groove structure 192 may be regarded as a structure that is formed by the side surfaces 1911 and 192, which are connected by the boundary part 1914, and the boundary part 1914. The groove structure 192 may be regarded as a structure that includes a groove facing the side surfaces 1911 and 192, which are connected by the boundary part 1914, and the boundary part 1914. Moreover, the riblet structure surface 130 may be considered to include the boundary part 1914 (for example, the bottom surface of the groove structure 192) in addition to or instead of the side surfaces 1911 and 1912.

The plurality of convex structures 191 may be formed so that the plurality of convex structures 191 are arranged in a regular pattern. For example, the plurality of convex structures 191 may be formed so that the plurality of convex structures 191 are arranged along the predetermined arrangement direction with equal pitch. For example, the plurality of convex structures 191 may be formed so that structure groups, each of which includes at least two convex structures 191, are arranged along the predetermined arrangement direction with equal pitch. The plurality of convex structures 191 may be formed so that at least two convex structures 191 are arranged in a regular pattern in accordance with a first rule in a first part of the surface of the riblet sheet 1a and at least two convex structures 191 are arranged in a regular pattern in accordance with the same first rule in a second part of the surface of the riblet sheet 1a. However, the plurality of convex structures 191 may be formed so that at least two convex structures 191 are arranged in a regular pattern in accordance with a first rule in a first part of the surface of the riblet sheet 1a and at least two convex structures 191 are arranged in a regular pattern in accordance with a second rule different from the first rule in a second part of the surface of the riblet sheet 1a, as described in a second example embodiment. Note that a state in which the plurality of convex structures 191 are arranged in a regular pattern may be considered to be equivalent to a state in which the plurality of groove structures 192 are arranged in a regular pattern, because the convex structures 191 and the groove structures 192 are formed alternately.

A height H_rb of at least one of the plurality of convex structures 191 may be set to a height determined based on a pitch P_rb of the convex structures 191. For example, the height H_rb of at least one of the plurality of convex structures 191 may be equal to or less than the pitch P_rb of the convex structures 191. For example, the height H_rb of at least one of the plurality of convex structures 191 may be equal to or less than half of the pitch P_rb of the convex structures 191. Furthermore, the height H_rb of at least one of the plurality of convex structures 191 may be within a range of half of the pitch P_rb of the convex structures 191 -1#2 ± 10%. Note that the height H_rb may be a height from the bottom surface of the groove structure 192 (namely, the boundary part 1914). The height H_rb may be referred to as a depth from the vertex or the ridge line (namely, the corner part 1913) of the convex structure 191.

The riblet structure RB may be used as a structure by which a resistance (especially, at least one of a frictional resistance and a turbulent frictional resistance) of the surface of the riblet sheet 1a (typically, the riblet structure surface 130) to a fluid is reducible. In this case, the riblet structure surface 130 on which the riblet structure RB is formed may be regarded as a surface by which the resistance of the riblet sheet 1a (typically, the riblet structure surface 130) to the fluid is reducible.

The riblet sheet 1a on which the riblet structure RB is formed may be attached to the object OBJ through the adhesive layer 11. In this case, the riblet structure RB may be used as a structure by which a resistance (especially, at least one of a frictional resistance and a turbulent frictional resistance) of a surface of the object OBJ, to which the riblet sheet 1a is attached, to the fluid is reducible. Therefore, the riblet sheet 1a may be attached to the object OBJ including a member that is disposed (in other words, positioned) in the fluid. Note that a term "fluid" means any medium (for example, at least one of gas and liquid) that flows relative to the front surface of the object OBJ. For example, in a case where the front surface of object OBJ moves relative to the medium although the medium itself is static, this medium may be referred to as the fluid. Note that a state where the medium is static may mean a state where the medium does not move relative to a predetermined reference object (for example, a ground surface).

### (1-2) One Example Of Object OBJ to which Riblet Sheet 1a is attached

The movable body is one example of the object OBJ to which the riblet sheet 1a is attached. Especially, the movable body that is movable in the fluid the example of the object OBJ to which the riblet sheet 1a is attached. At least one of a railway vehicle, an automobile, an aircraft, a ship, a windmill, and a turbine is one example of the movable body. However, the riblet sheet 1a may be attached to the object OBJ that is different from the movable body.

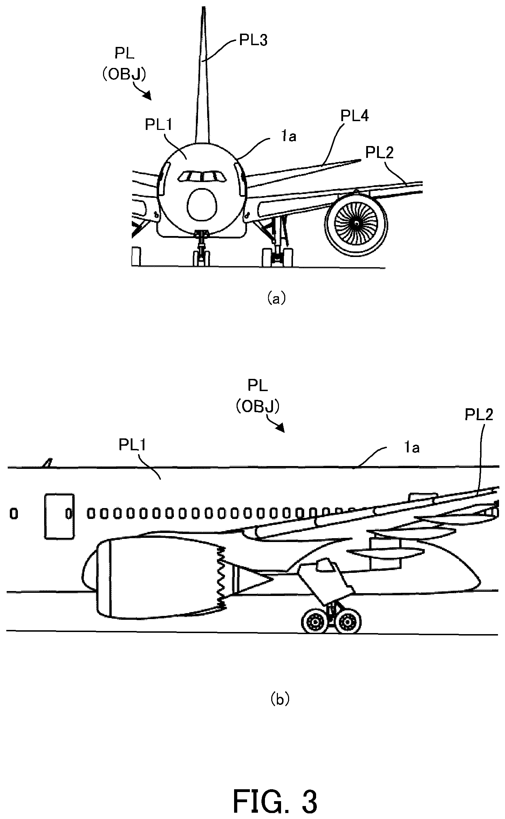

For example, FIG. 3(a) to 3(b) illustrate an aircraft PL in which the riblet sheet 1a is attached to at least a part of its surface. As illustrated in FIG. 3(a) to FIG. 3(b), the riblet sheet 1a may be attached to at least a part of a fuselage PL1 of the aircraft PL. The riblet sheet 1a may be attached to at least a part of a main wing PL2 of the aircraft PL. The riblet sheet 1a may be attached to at least a part of a vertical tail PL3 of the aircraft PL. The riblet sheet 1a may be attached to at least a part of a horizontal tail PL4 of the aircraft PL.

In a case where the riblet sheet 1a is attached to at least a part of the surface of the movable body (alternatively, any object OBJ, the same applies in the below-described description), the movable body is movable relative to the fluid relatively easily. Therefore, the resistance that prevents the movable body from moving relative to the fluid is reduced, and thereby an energy saving is achievable. Namely, it is possible to manufacture the environmentally preferable movable body. For example, in a case where the riblet sheet 1a is attached to at least a part of the surface of the aircraft, the resistance that prevents the aircraft from moving is reduced, and thereby a fuel saving of the aircraft is achievable. For example, in a case where the riblet sheet 1a is attached to at least a part of the surface of the windmill, the resistance that prevents the windmill from moving (typically, rotating) is reduced, and thereby a high efficiency of the windmill is achievable. For example, in a case where the riblet sheet 1a is attached to at least a part of a surface of the turbine for an engine (especially, a turbine blade), the resistance that prevents the turbine for the engine from moving (typically, rotating) is reduced, and thereby a high efficiency or energy saving of the turbine for the engine is achievable. For example, in a case where the riblet sheet 1a is attached to at least a part of a surface of the turbine for a power generation(especially, a turbine blade), the resistance that prevents the turbine for the power generation from moving (typically, rotating) is reduced, and thereby a high efficiency or energy saving of the turbine for the power generation is achievable. Therefore, there is a possibility that the riblet sheet 1a can contribute "13-2-2 Total Greenhous gas emission per year" in indicators included in Goal 13 (Take urgent action to combat climate change and its impact) of Sustainable Development Goals (SDGs) initiated by United Nations.

### (1-3) Attachment of Plurality of Riblet Sheets 1a to Object OBJ

### (1-3-1) Plurality of Riblet Sheets 1a

In the first example embodiment, the plurality of riblet sheets 1a may be attached to the surface of the object OBJ. Especially, in the first example embodiment, the plurality of riblet sheets 1a, on which a plurality of types of riblet structures RB are formed, respectively, may be attached to the surface of the object OBJ. Namely, the plurality of riblet sheets 1a, which have different riblet structures RB, respectively, may be attached to the surface of the object OBJ.

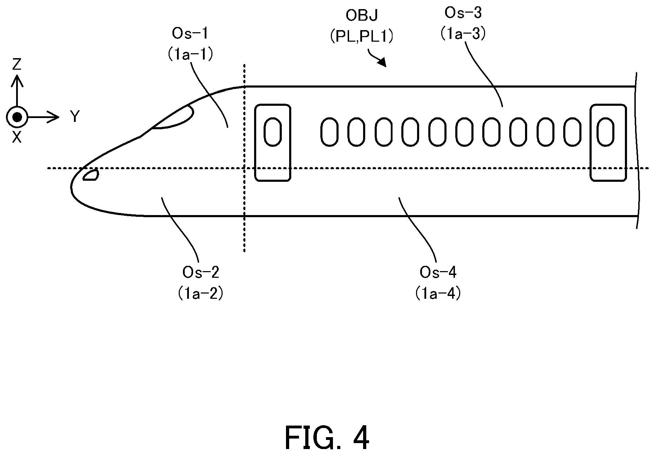

For example, FIG. 4 is a side view illustrating the aircraft PL (especially, the fuselage PL1 of the aircraft PL) that is one example of the object OBJ. In this case, a first riblet sheet 1a-1 on which a first type of riblet structure RB is formed, a second riblet sheet 1a-2 on which a second type of riblet structure RB is formed, ... , and a N-th riblet sheet 1a-N on which a N-th type of riblet structure RB (wherein, N is a constant number representing an integer that is equal to or greater than 2) is formed may be attached to the surface of the object OBJ (namely, the surface of the aircraft PL). In other words, the surface of the object OBJ may include a first surface Os-1 to which the first riblet sheet 1a-1 is attached, a second surface Os-2 to which the second riblet sheet 1a-2 is attached, ... , and a N-th surface Os-N to which the N-th riblet sheet 1a-N is attached. Namely, the surface of the object OBJ may include a k-th surface Os-k to which a k-th riblet sheet 1a-k is attached (wherein k is a variable number representing an integer of that is equal to or greater than 1 and that is equal to or less than the constant number N). Note that the k-th surface Os-k may be a surface that is set in advance on the surface of the object OBJ as the surface to which the k-th riblet sheet 1a-k should be attached. In this case, the k-th riblet sheet 1a-k may be attached to the k-th surface Os-k that is set in advance on the surface of the object OBJ. Alternatively, a surface part, to which the k-th riblet sheet 1a-k is attached, of the surface of the object OBJ may be used as the k-th surface Os-k. In this case, the k-th riblet sheet 1a-k may be attached to any position on the surface of the object OBJ, and the surface part, to which the k-th riblet sheet 1a-k is attached, of the surface of the object OBJ may be used as the k-th surface Os-k.

FIG. 4 illustrates an example in which the first riblet sheet 1a-1, the second riblet sheet 1a-2, the third riblet sheet 1a-3, and the fourth riblet sheet 1a-4 are attached to the surface of the object OBJ. Namely, FIG. 4 illustrates an example in which the surface of the object OBJ includes the first surface Os-1 to which the first riblet sheet 1a-1 is attached, the second surface Os-2 to which the second riblet sheet 1a-2 is attached, the third surface Os-3 to which the third riblet sheet 1a-3 is attached, and the fourth surface Os-4 to which the fourth riblet sheet 1a-4 is attached.

The surface of the object OBJ may include a single k-th surface Os-k. For example, the surface of the object OBJ may include a single first surface Os-1. For example, the surface of the object OBJ may include a single second surface Os-2. Alternatively, the surface of the object OBJ may include a plurality of k-th surfaces Os-k that are positioned at different positions on the surface of the object OBJ, respectively. For example, the surface of the object OBJ may include a plurality of first surfaces Os-1 that are positioned at different positions on the surface of the object OBJ, respectively. For example, the surface of the object OBJ may include a plurality of second surfaces Os-2 that are positioned at different positions on the surface of the object OBJ, respectively.

A single riblet sheet 1a-k may be attached to a single k-th surface Os-k. For example, a single first riblet sheet 1a-1 may be attached to a single first surface Os-1. For example, a single second riblet sheet 1a-2 may be attached to a single second surface Os-2. Alternatively, a plurality of riblet sheets 1a-k may be attached to a single k-th surface Os-k. For example, a plurality of first riblet sheets 1a-1 may be attached to a single first surface Os-1. For example, a plurality of second riblet sheets 1a-2 may be attached to a single second surface Os-2.

A characteristic of the first type of riblet structure RB to a characteristic of the N-th type of riblet structure RB may be different from each other. For example, the characteristic of the first type of riblet structure RB may be different from the characteristic of the second type of riblet structure RB to the characteristic of the N-th type of riblet structure RB. For example, the characteristic of the second type of riblet structure RB may be different from the characteristic of the first type of riblet structure RB and the characteristic of the third type of riblet structure RB to the characteristic of the N-th type of riblet structure RB. For example, the characteristic of the k-th type of riblet structure RB may be different from the characteristic of the first type of riblet structure RB to the characteristic of the (k-1)-th type of riblet structure RB and the characteristic of the (k+1)-th type of riblet structure RB to the characteristic of the N-th type of riblet structure RB. For example, the characteristic of the N-th type of riblet structure RB may be different from the characteristic of the first type of riblet structure RB to the characteristic of the (N-1)-th type of riblet structure RB.

The characteristic of the riblet structure RB may include the pitch P_rb of the convex structure 191 included in the riblet structure RB. The characteristic of the riblet structure RB may include the height H_rb of the convex structure 191 included in the riblet structure RB, in addition to or instead of the pitch P_rb. The characteristic of the riblet structure RB may include the extension direction of the convex structure 191 included in the riblet structure RB, in addition to or instead of at least one of the pitch P_rb and the height H_rb.

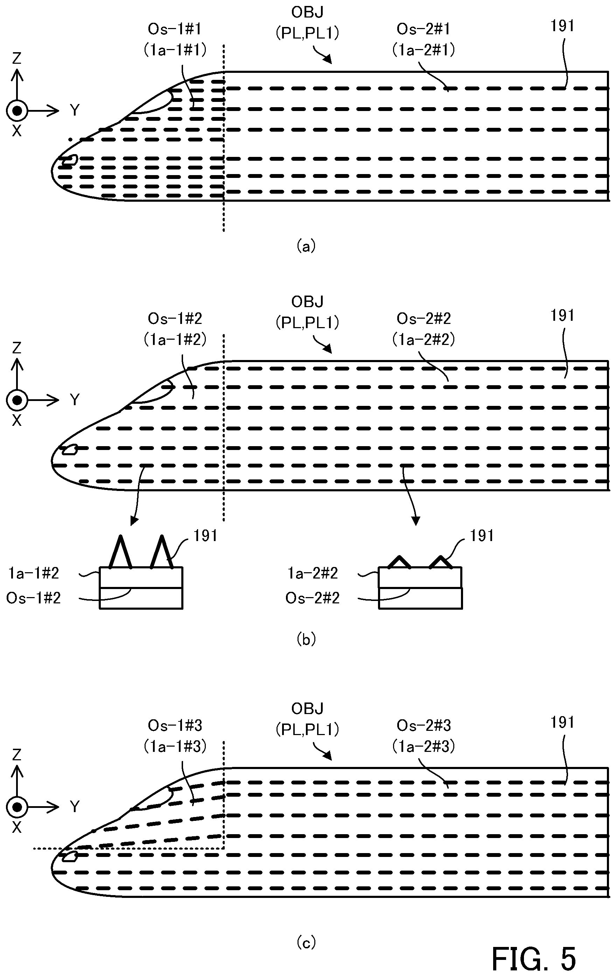

As a first example, as illustrated in FIG. 5(a), a first riblet sheet 1a-1#1 on which the riblet structure RB, in which the plurality of convex structures 191 are arranged at a first pitch P_rb, is formed and a second riblet sheet 1a-2#1 on which the riblet structure RB, in which the plurality of convex structures 191 are arranged at a second pitch P_rb that is different from the first pitch P_rb, is formed may be attached to the surface of the object OBJ. Namely, the surface of the object OBJ may include a first surface Os-1#1 to which the first riblet sheet 1a-1#1 is attached and a second surface Os-2#1 to which the second riblet sheet 1a-2#1 is attached. Note that the height H_rb of the convex structure 191 that is formed on the first riblet sheet 1a-1#1 may be the same as or may be different from the height H_rb of the convex structure 191 that is formed on the second riblet sheet 1a-2#1. The extension direction of the convex structure 191 that is formed on the first riblet sheet 1a-1#1 may be the same as or may be different from the extension direction of the convex structure 191 that is formed on the second riblet sheet 1a-2#1.

As a second example, as illustrated in FIG. 5(b), a first riblet sheet 1a-1#2 on which the riblet structure RB, which includes the convex structure 191 having a first height H_rb, is formed and a second riblet sheet 1a-2#2 on which the riblet structure RB, which includes the convex structure 191 having a second height H_rb that is different from the first height H_rb, is formed may be attached to the surface of the object OBJ. Namely, the surface of the object OBJ may include a first surface Os-1#2 to which the first riblet sheet 1a-1#2 is attached and a second surface Os-2#2 to which the second riblet sheet 1a-2#2 is attached. Note that the pitch P_rb of the convex structures 191 that is formed on the first riblet sheet 1a-1#2 may be the same as or may be different from the pitch P_rb of the convex structures 191 that is formed on the second riblet sheet 1a-2#2. The extension direction of the convex structure 191 that is formed on the first riblet sheet 1a-1#2 may be the same as or may be different from the extension direction of the convex structure 191 that is formed on the second riblet sheet 1a-2#2.

As a third example, as illustrated in FIG. 5(c), a first riblet sheet 1a-1#3 on which the riblet structure RB, which includes the convex structure 191 extending along a first extension direction, is formed and a second riblet sheet 1a-2#3 on which the riblet structure RB, which includes the convex structure 191 extending along a second extension direction that is different from the first extension direction, is formed may be attached to the surface of the object OBJ. Namely, the surface of the object OBJ may include a first surface Os-1#3 to which the first riblet sheet 1a-1#3 is attached and a second surface Os-2#3 to which the second riblet sheet 1a-2#3 is attached. Note that the pitch P_rb of the convex structures 191 that is formed on the first riblet sheet 1a-1#3 may be the same as or may be different from the pitch P_rb of the convex structures 191 that is formed on the second riblet sheet 1a-2#3. The height H_rb of the convex structure 191 that is formed on the first riblet sheet 1a-1#3 may be the same as or may be different from the height H_rb of the convex structure 191 that is formed on the second riblet sheet 1a-2#3. .

### (1-3-2) Method for Setting Characteristic of Riblet Structure RB Formed on Riblet Sheet 1a

Next, a method for setting the characteristic of the riblet structure RB formed on the riblet sheet 1a will be described.

### (1-3-2-1) First Example of Method for Setting Characteristic of Riblet Structure RB Formed on Riblet Sheet 1a (First Characteristic Setting Method)

According to a first characteristic setting method, the characteristic of the riblet structure RB may be set to a characteristic that is suitable for a purpose of reducing the fluid resistance of the surface part, to which the riblet sheet 1a is attached, of the surface of the object OBJ. Specifically, the characteristic of the k-th type of riblet structure RB that is formed on the k-th riblet sheet 1a-k may be set to a k-th characteristic that is suitable for the purpose of reducing the fluid resistance of the k-th surface Os-k, to which the k-th riblet sheet 1a-k is attached, of the surface of the object OBJ. For example, the pitch P_rb of the convex structure 191 that is formed on the k-th riblet sheet 1a-k may be set to a k-th pitch P_rb that is suitable for the purpose of reducing the fluid resistance of the k-th surface Os-k. For example, the height H_rb of the convex structure 191 that is formed on the k-th riblet sheet 1a-k may be set to a k-th height H_rb that is suitable for the purpose of reducing the fluid resistance of the k-th surface Os-k. For example, the extension direction of the convex structure 191 that is formed on the k-th riblet sheet 1a-k may be set to a k-th extension direction that is suitable for the purpose of reducing the fluid resistance of the k-th surface Os-k. The k-th extension direction may be a direction including a directional component that is along a direction of a streamline on the k-th surface Os-k (namely, a flow direction of the fluid on the k-th surface Os-k).

As one example, the characteristic of the first type of riblet structure RB that is formed on the first riblet sheet 1a-1 may be set to a first characteristic that is suitable for the purpose of reducing the fluid resistance of the first surface Os-1, to which the first riblet sheet 1a-1 is attached, of the surface of the object OBJ. For example, the characteristic of the second type of riblet structure RB that is formed on the second riblet sheet 1a-2 may be set to a second characteristic that is suitable for the purpose of reducing the fluid resistance of the second surface Os-2, to which the second riblet sheet 1a-2 is attached, of the surface of the object OBJ. In this case, the first riblet sheet 1a-1 may be attached to the first surface Os-1 that is set in advance on the surface of the object OBJ, and the second riblet sheet 1a-2 may be attached to the second surface Os-2 that is set in advance on the surface of the object OBJ.

Here, in a case where the first riblet sheet 1a-1 is attached to each of the first surface Os-1 and the second surface Os-2, there is a possibility that the fluid resistance of the first surface Os-1 is properly reduced but the fluid resistance of the second surface Os-2 is not properly reduced. Similarly, in a case where the second riblet sheet 1a-2 is attached to each of the first surface Os-1 and the second surface Os-2, there is a possibility that the fluid resistance of the second surface Os-2 is properly reduced but the fluid resistance of the first surface Os-1 is not properly reduced. However, according to the first characteristic setting method, the first riblet sheet 1a-1 and the second riblet sheet 1a-2 are attached to the first surface Os-1 and the second surface Os-2, respectively. Therefore, the fluid resistance of the first surface Os-1 is properly reduced by the first riblet sheet 1a-1, and the fluid resistance of the second surface Os-2 is properly reduced by the second riblet sheet 1a-2. Therefore, in a case where the first characteristic setting method is used, the object OBJ to which the riblet sheet 1a is attached can properly achieve a resistance reduction effect provided by the riblet sheet 1a (namely, an effect of reducing the fluid resistance of the surface of the object OBJ, to which the riblet sheet 1a is attached).

### (1-3-2-2) Second Example of Method for Setting Characteristic of Riblet Structure RB Formed on Riblet Sheet 1a (Second Characteristic Setting Method)

According to a second characteristic setting method, the characteristic of the riblet structure RB may be set to a characteristic that is suitable for a purpose of reducing the fluid resistance of the object OBJ (namely, the movable body), which moves in a predetermined movement aspect, to the fluid. Specifically, the characteristic of the k-th type of riblet structure RB that is formed on the k-th riblet sheet 1a-k may be set to a k-th characteristic that is suitable for the purpose of reducing the fluid resistance of the object OBJ, which moves in a k-th movement aspect. For example, the pitch P_rb of the convex structure 191 that is formed on the k-th riblet sheet 1a-k may be set to a k-th pitch P_rb that is suitable for the purpose of reducing the fluid resistance of the object OBJ, which moves in the k-th movement aspect. For example, the height H_rb of the convex structure 191 that is formed on the k-th riblet sheet 1a-k may be set to a k-th height H_rb that is suitable for the purpose of reducing the fluid resistance of the object OBJ, which moves in the k-th movement aspect. For example, the extension direction of the convex structure 191 that is formed on the k-th riblet sheet 1a-k may be set to a k-th extension direction that is suitable for the purpose of reducing the fluid resistance of the object OBJ, which moves in the k-th movement aspect.

In a case where the second characteristic setting method is used, the object OBJ may be movable in each of a first movement aspect, a second movement aspect that is different from the first movement aspect, ... , and a N-th movement aspect that is different from the first to (N-1)-th movement aspects. In this case, the characteristic of the first type of riblet structure RB that is formed on the first riblet sheet 1a-1 may be set to a first characteristic that is suitable for reducing the fluid resistance of the object OBJ, which moves in the first movement aspect. The characteristic of the second type of riblet structure RB that is formed on the second riblet sheet 1a-2 may be set to a second characteristic that is suitable for reducing the fluid resistance of the object OBJ, which moves in the second movement aspect. The characteristic of the N-th type of riblet structure RB that is formed on the N-th riblet sheet 1a-N may be set to a N-th characteristic that is suitable for reducing the fluid resistance of the object OBJ, which moves in the N-th movement aspect. Namely, the characteristic of the k-th type of riblet structure RB that is formed on the k-th riblet sheet 1a-k may be set to a k-th characteristic that is suitable for reducing the fluid resistance of the object OBJ, which moves in the k-th movement aspect. In this case, the k-th riblet sheet 1a-k may be attached to the k-th surface Os-k that is set in advance on the surface of the object OBJ. Alternatively, the k-th riblet sheet 1a-k may be attached to any position on the surface of the object OBJ, and the surface part, to which the k-th riblet sheet 1a-k is attached, of the surface of the object OBJ may be used as the k-th surface Os-k.

As one example, the object OBJ may be movable at least in each of the first movement aspect and the second movement aspect. In this case, the characteristic of the first type of riblet structure RB that is formed on the first riblet sheet 1a-1 may be set to the first characteristic that is suitable for reducing the fluid resistance of the object OBJ, which moves in the first movement aspect. The characteristic of the second type of riblet structure RB that is formed on the second riblet sheet 1a-2 may be set to the second characteristic that is suitable for reducing the fluid resistance of the object OBJ, which moves in the second movement aspect. In this case, the first riblet sheet 1a-1 may be attached to the first surface Os-1 that is set in advance on the surface of the object OBJ, and the second riblet sheet 1a-2 may be attached to the second surface Os-2 that is set in advance on the surface of the object OBJ, Alternatively, each of the first riblet sheet 1a-1 and the second riblet sheet 1a-2 may be attached to any position on the surface of the object OBJ, the surface part, to which the first riblet sheet 1a-1 is attached, of the surface of the object OBJ may be used as the first surface Os-1, and the surface part, to which the second riblet sheet 1a-2 is attached, of the surface of the object OBJ may be used as the second surface Os-2.

Here, in a case where the first riblet sheet 1a-1 is attached to each of the first surface Os-1 and the second surface Os-2, there is a possibility that the fluid resistance of the object OBJ, which moves in the first movement aspect, is properly reduced but the fluid resistance of the object OBJ, which moves in the second movement aspect, is not properly reduced. Similarly, in a case where the second riblet sheet 1a-2 is attached to each of the first surface Os-1 and the second surface Os-2, there is a possibility that the fluid resistance of the object OBJ, which moves in the second movement aspect, is properly reduced but the fluid resistance of the object OBJ, which moves in the first movement aspect, is not properly reduced. However, according to the second characteristic setting method, the first riblet sheet 1a-1 and the second riblet sheet 1a-2 are attached to the first surface Os-1 and the second surface Os-2, respectively. Therefore, the first riblet sheet 1a-1 properly reduces the flid resistance of the object OBJ, which moves in the first movement aspect, and the second riblet sheet 1a-2 properly reduces the fluid resistance of the object OBJ, which moves in the second movement aspect. Therefore, in a case where the second characteristic setting method is used, the resistance reduction effect provided by the riblet sheet 1a is properly achievable in a situation where the object OBJ, to which the riblet sheet 1a is attached, moves in various movement aspects. Namely, the resistance reduction effect provided by the riblet sheet 1a is properly achievable in a situation where the movement aspect of the object OBJ, to which the riblet sheet 1a is attached, changes.

A total areal size of the k-th surface Os-k, to which the k-th riblet sheet 1a-k is attached, on the surface of the object OBJ may be set based on a frequency with which the object OBJ moves in the k-th movement aspect in a predetermined period. Especially, the total areal size of the k-th surface Os-k, to which the k-th riblet sheet 1a-k is attached, on the surface of the object OBJ and a total areal size of a m-th surface Os-m, to which a m-th riblet sheet 1a-m is attached (wherein m is a variable number representing an integer that is equal to or greater than 1, that is equal to or less than the constant number N, and that is different from the variable number k), on the surface of the object OBJ may be set based on the frequency with which the object OBJ moves in the k-th movement aspect in the predetermined period and a frequency with which the object OBJ moves in the m-th movement aspect in the predetermined period. More specifically, a ratio of the total areal size of the k-th surface Os-k and the total areal size of the m-th surface Os-m may be set based on a ratio of the frequency with which the object OBJ moves in the k-th movement aspect in the predetermined period and the frequency with which the object OBJ moves in the m-th movement aspect in the predetermined period. As one example, the total areal size of the k-th surface Os-k and the total areal size of the m-th surface Os-m may be set so that the ratio of the total areal size of the k-th surface Os-k and the total areal size of the m-th surface Os-m is equal to or is proportional to the ratio of the frequency with which the object OBJ moves in the k-th movement aspect in the predetermined period to the frequency with which the object OBJ moves in the m-th movement aspect in the predetermined period.

As one example, an example in which the variable number k is 1 and the variable number m is 2 will be described. In this case the total areal size of the first surface Os-1, to which the first riblet sheet 1a-1 is attached, on the surface of the object OBJ and the total areal size of the second surface Os-2, to which the second riblet sheet 1a-2 is attached, on the surface of the object OBJ may be set based on the frequency with which the object OBJ moves in the first movement aspect in the predetermined period and the frequency with which the object OBJ moves in the second movement aspect in the predetermined period. More specifically, the ratio of the total areal size of the first surface Os-1 and the total areal size of the second surface Os-2 may be set based on the ratio of the frequency with which the object OBJ moves in the first movement aspect in the predetermined period and the frequency with which the object OBJ moves in the second movement aspect in the predetermined period.

For example, the total areal size of the first surface OS-1 and the toral areal size of the second surface OS-2 may be set so that the ratio of the total areal size of the first surface Os-1 and the total areal size of the second surface Os-2 is equal to or is proportional to the ratio of the frequency with which the object OBJ moves in the first movement aspect in the predetermined period and the frequency with which the object OBJ moves in the second movement aspect in the predetermined period. In this case, in a case where the frequency with which the object OBJ moves in the first movement aspect in the predetermined period is higher than the frequency with which the object OBJ moves in the second movement aspect in the predetermined period, the total areal size of the first surface Os-1 may be larger than the total areal size of the second surface Os-2. As a result, the effect of reducing the fluid resistance of the object OBJ, which moves in the first movement aspect in which it moves with higher frequency, is greater than the effect of reducing the fluid resistance of the object OBJ, which moves in the second movement aspect in which it moves with lower frequency, compared to a case where the total areal size of the first surface Os-1 is smaller than the total areal size of the second surface Os-2 . Therefore, the object OBJ to which the riblet sheet 1a is attached can achieve the resistance reduction effect provided by the riblet sheet 1a more effectively. On the other hand, in a case where the frequency with which the object OBJ moves in the first movement aspect in the predetermined period is lower than the frequency with which the object OBJ moves in the second movement aspect in the predetermined period, the total areal size of the first surface Os-1 may be smaller than the total areal size of the second surface Os-2. As a result, the effect of reducing the fluid resistance of the object OBJ, which moves in the second movement aspect in which it moves with higher frequency, is greater than the effect of reducing the fluid resistance of the object OBJ, which moves in the first movement aspect in which it moves with lower frequency, compared to a case where the total areal size of the first surface Os-1 is larger than the total areal size of the second surface Os-2 . Therefore, the object OBJ to which the riblet sheet 1a is attached can achieve the resistance reduction effect provided by the riblet sheet 1a more effectively.

The movement aspect of the object OBJ may include a movement speed of the object OBJ. In this case, the characteristic of the riblet structure RB may be set to a characteristic that is suitable for the purpose of reducing the fluid resistance of the object OBJ (namely, the movable body), which moves at a predetermined movement speed. Specifically, the characteristic of the k-th type of riblet structure RB that is formed on the k-th riblet sheet 1a-k may be set to a k-th characteristic that is suitable for the purpose of reducing the fluid resistance of the object OBJ, which moves at a k-th movement speed. For example, the object OBJ may be movable at each of at least a first movement speed and a second movement speed that is different from the first movement speed. In this case, the characteristic of the first type of riblet structure RB that is formed on the first riblet sheet 1a-1 may be set to a first characteristic that is suitable for the purpose of reducing the fluid resistance of the object OBJ, which moves at the first movement speed. On the other hand, the characteristic of the second type of riblet structure RB that is formed on the second riblet sheet 1a-2 may be set to a second characteristic that is suitable for the purpose of reducing the fluid resistance of the object OBJ, which moves at the second movement speed. As a result, the riblet sheet 1a-1 properly reduces the fluid resistance of the object OBJ, which moves at the first movement speed, and the riblet sheet 1a-2 also properly reduces the fluid resistance of the object OBJ, which moves at the second movement speed. Therefore, in a case where the second characteristic setting method is used, the resistance reduction effect provided by the riblet sheet 1a is properly achievable in a situation where the object OBJ, to which the riblet sheet 1a is attached, moves at various speeds. Namely, the resistance reduction effect provided by the riblet sheet 1a is properly achievable in a situation where the movement speed of the object OBJ, to which the riblet sheet 1a is attached, changes.

In a case where the movement aspect of the object OBJ includes the movement speed of the object OBJ, the total areal size of the k-th surface Os-k, to which the k-th riblet sheet 1a-k is attached, on the surface of the object OBJ may be set based on the frequency with which the object OBJ moves at the k-th movement speed in the predetermined period. For example, the total areal size of the k-th surface Os-k and the total areal size of the m-th surface Os-m may be set based on the frequency with which the object OBJ moves at the k-th movement speed in the predetermined period and the frequency with which the object OBJ moves at the m-th movement speed in the predetermined period. More specifically, the ratio of the total areal size of the k-th surface Os-k and the total areal size of the m-th surface Os-m may be set based on the ratio of the frequency with which the object OBJ moves at the k-th movement speed in the predetermined period and the frequency with which the object OBJ moves at the m-th movement speed in the predetermined period. As one example, the total areal size of the k-th surface Os-k and the total areal size of the m-th surface Os-m may be set so that the ratio of the total areal size of the k-th surface Os-k and the total areal size of the m-th surface Os-m is equal to or is proportional to the ratio of the frequency with which the object OBJ moves at the k-th movement speed in the predetermined period to the frequency with which the object OBJ moves at the m-th movement speed in the predetermined period. In this case, in a case where the frequency with which the object OBJ moves at the k-th movement speed in the predetermined period is higher than the frequency with which the object OBJ moves at the m-th movement speed in the predetermined period, the total areal size of the k-th surface Os-k may be larger than the total areal size of the m-th surface Os-m. On the other hand, in a case where the frequency with which the object OBJ moves at the k-th movement speed in the predetermined period is lower than the frequency with which the object OBJ moves at the m-th movement speed in the predetermined period, the total areal size of the k-th surface Os-k may be smaller than the total areal size of the m-th surface Os-m. As a result, the object OBJ to which the riblet sheet 1a is attached can achieve the resistance reduction effect provided by the riblet sheet 1a more effectively.

### (1-3-2-3) Third Example of Method for Setting Characteristic of Riblet Structure RB Formed on Riblet Sheet 1a (Third Characteristic Setting Method)

According to a third characteristic setting method, the characteristic of the riblet structure RB may be set to a characteristic that is suitable for the purpose of reducing the fluid resistance of the object OBJ (namely, the movable body), which moves under a predetermined movement environment. Specifically, the characteristic of the k-th type of riblet structure RB that is formed on the k-th riblet sheet 1a-k may be set to a k-th characteristic that is suitable for the purpose of reducing the fluid resistance of the object OBJ, which moves under a k-th movement environment. For example, the pitch P_rb of the convex structure 191 that is formed on the k-th riblet sheet 1a-k may be set to a k-th pitch P_rb that is suitable for the purpose of reducing the fluid resistance of the object OBJ, which moves under the k-th movement environment. For example, the height H_rb of the convex structure 191 that is formed on the k-th riblet sheet 1a-k may be set to a k-th height H_rb that is suitable for the purpose of reducing the fluid resistance of the object OBJ, which moves under the k-th movement environment. For example, the extension direction of the convex structure 191 that is formed on the k-th riblet sheet 1a-k may be set to a k-th extension direction that is suitable for the purpose of reducing the fluid resistance of the object OBJ, which moves under a k-th movement environment.

In a case where the third characteristic setting method is used, the object OBJ may be movable under each of a first movement environment, a second movement environment that is different from the first movement environment, ... , and a N-th movement environment that is different from the first to N-1 movement environments. In this case, the characteristic of the first type of riblet structure RB that is formed on the first riblet sheet 1a-1 may be set to a first characteristic that is suitable for reducing the fluid resistance of the object OBJ, which moves under the first movement environment. The characteristic of the second type of riblet structure RB that is formed on the second riblet sheet 1a-2 may be set to a second characteristic that is suitable for reducing the fluid resistance of the object OBJ, which moves under the second movement environment. The characteristic of the N-th type of riblet structure RB that is formed on the N-th riblet sheet 1a-N may be set to a N-th characteristic that is suitable for reducing the fluid resistance of the object OBJ, which moves under the N-th movement environment. Namely, the characteristic of the k-th type of riblet structure RB that is formed on the k-th riblet sheet 1a-k may be set to a k-th characteristic that is suitable for reducing the fluid resistance of the object OBJ, which moves under the k-th movement environment. In this case, the k-th riblet sheet 1a-k may be attached to the k-th surface Os-k that is set in advance on the surface of the object OBJ. Alternatively, the k-th riblet sheet 1a-k may be attached to any position on the surface of the object OBJ, and the surface part, to which the k-th riblet sheet 1a-k is attached, of the surface of the object OBJ may be used as the k-th surface Os-k.

As one example, the object OBJ may be movable at least under each of the first movement environment and the second movement environment. In this case, the characteristic of the first type of riblet structure RB that is formed on the first riblet sheet 1a-1 may be set to the first characteristic that is suitable for reducing the fluid resistance of the object OBJ, which moves under the first movement environment. The characteristic of the second type of riblet structure RB that is formed on the second riblet sheet 1a-2 may be set to the second characteristic that is suitable for reducing the fluid resistance of the object OBJ, which moves under the second movement environment. In this case, the first riblet sheet 1a-1 may be attached to the first surface Os-1 that is set in advance on the surface of the object OBJ, and the second riblet sheet 1a-2 may be attached to the second surface Os-2 that is set in advance on the surface of the object OBJ, Alternatively, each of the first riblet sheet 1a-1 and the second riblet sheet 1a-2 may be attached to any position on the surface of the object OBJ, the surface part, to which the first riblet sheet 1a-1 is attached, of the surface of the object OBJ may be used as the first surface Os-1, and the surface part, to which the second riblet sheet 1a-2 is attached, of the surface of the object OBJ may be used as the second surface Os-2.

Here, in a case where the first riblet sheet 1a-1 is attached to each of the first surface Os-1 and the second surface Os-2, there is a possibility that the fluid resistance of the object OBJ, which moves under the first movement environment, is properly reduced but the fluid resistance of the object OBJ, which moves under the second movement environment, is not properly reduced. Similarly, in a case where the second riblet sheet 1a-2 is attached to each of the first surface Os-1 and the second surface Os-2, there is a possibility that the fluid resistance of the object OBJ, which moves under the second movement environment, is properly reduced but the fluid resistance of the object OBJ, which moves under the first movement environment, is not properly reduced. However, according to the third characteristic setting method, the first riblet sheet 1a-1 and the second riblet sheet 1a-2 are attached to the first surface Os-1 and the second surface Os-2, respectively. Therefore, the first riblet sheet 1a-1 properly reduces the flid resistance of the object OBJ, which moves under the first movement environment, and the second riblet sheet 1a-2 properly reduces the fluid resistance of the object OBJ, which moves under the second movement environment. Therefore, in a case where the third characteristic setting method is used, the resistance reduction effect provided by the riblet sheet 1a is properly achievable in a situation where the object OBJ, to which the riblet sheet 1a is attached, moves under various movement environments. Namely, the resistance reduction effect provided by the riblet sheet 1a is properly achievable in a situation where the movement environment of the object OBJ, to which the riblet sheet 1a is attached, changes.

The total areal size of the k-th surface Os-k, to which the k-th riblet sheet 1a-k is attached, on the surface of the object OBJ may be set based on a frequency with which the object OBJ moves under the k-th movement environment in a predetermined period. Especially, the total areal size of the k-th surface Os-k, to which the k-th riblet sheet 1a-k is attached, on the surface of the object OBJ and the total areal size of the m-th surface Os-m, to which the m-th riblet sheet 1a-m is attached, on the surface of the object OBJ may be set based on the frequency with which the object OBJ moves under the k-th movement environment in the predetermined period and a frequency with which the object OBJ moves under the m-th movement environment in the predetermined period. More specifically, the ratio of the total areal size of the k-th surface Os-k and the total areal size of the m-th surface Os-m may be set based on a ratio of the frequency with which the object OBJ moves under the k-th movement environment in the predetermined period and the frequency with which the object OBJ moves under the m-th movement environment in the predetermined period. As one example, the total areal size of the k-th surface Os-k and the total areal size of the m-th surface Os-m may be set so that the ratio of the total areal size of the k-th surface Os-k and the total areal size of the m-th surface Os-m is equal to or is proportional to the ratio of the frequency with which the object OBJ moves under the k-th movement environment in the predetermined period to the frequency with which the object OBJ moves under the m-th movement environment in the predetermined period.

As one example, an example in which the variable number k is 1 and the variable number m is 2 will be described. In this case the total areal size of the first surface Os-1, to which the first riblet sheet 1a-1 is attached, on the surface of the object OBJ and the total areal size of the second surface Os-2, to which the second riblet sheet 1a-2 is attached, on the surface of the object OBJ may be set based on the frequency with which the object OBJ moves under the first movement environment in the predetermined period and the frequency with which the object OBJ moves under the second movement environment in the predetermined period. More specifically, the ratio of the total areal size of the first surface Os-1 and the total areal size of the second surface Os-2 may be set based on the ratio of the frequency with which the object OBJ moves under the first movement environment in the predetermined period and the frequency with which the object OBJ moves under the second movement environment in the predetermined period.

For example, the total areal size of the first surface OS-1 and the toral areal size of the second surface OS-2 may be set so that the ratio of the total areal size of the first surface Os-1 and the total areal size of the second surface Os-2 is equal to or is proportional to the ratio of the frequency with which the object OBJ moves under the first movement environment in the predetermined period and the frequency with which the object OBJ moves under the second movement environment in the predetermined period. In this case, in a case where the frequency with which the object OBJ moves under the first movement environment in the predetermined period is higher than the frequency with which the object OBJ moves under the second movement environment in the predetermined period, the total areal size of the first surface Os-1 may be larger than the total areal size of the second surface Os-2. As a result, the resistance reduction effect under first movement environment under which the object OBJ moves with a higher frequency is greater than the resistance reduction effect under second movement environment under which the object OBJ moves with a lower frequency, compared to a case where the total areal size of the first surface Os-1 is smaller than the total areal size of the second surface Os-2 . Therefore, the object OBJ to which the riblet sheet 1a is attached can achieve the resistance reduction effect provided by the riblet sheet 1a more effectively. On the other hand, in a case where the frequency with which the object OBJ moves under the first movement environment in the predetermined period is lower than the frequency with which the object OBJ moves under the second movement environment in the predetermined period, the total areal size of the first surface Os-1 may be smaller than the total areal size of the second surface Os-2. As a result, the resistance reduction effect under second movement environment under which the object OBJ moves with a higher frequency is greater than the resistance reduction effect under first movement environment under which the object OBJ moves with a lower frequency, compared to a case where the total areal size of the first surface Os-1 is larger than the total areal size of the second surface Os-2 . Therefore, the object OBJ to which the riblet sheet 1a is attached can achieve the resistance reduction effect provided by the riblet sheet 1a more effectively.

The movement environment of the object OBJ may include a flow speed of the fluid. Namely, the movement environment of the object OBJ may include the flow speed of the fluid that flows around the object OBJ moving in the fluid. Note that the flow speed of the fluid may mean a relative speed of the fluid relative to the object OBJ. Namely, the flow speed of the fluid may mean a relative speed that changes in accordance with the movement speed of the object OBJ moving in the fluid. Note that the flow speed of the fluid may mean a speed of the fluid itself in a case where the object OBJ is stationary in the fluid. Even in a case where the object OBJ is stationary in the fluid, the object OBJ may be considered to move relatively in the fluid as long as the fluid flows relative to the object OBJ.

In a case where the movement environment includes the flow speed of the fluid, the characteristic of the riblet structure RB may be set to a characteristic that is suitable for the purpose of reducing the resistance of the object OBJ (namely, the movable body) to the fluid flowing at a predetermined flow speed. Specifically, the characteristic of the k-th type of riblet structure RB that is formed on the k-th riblet sheet 1a-k may be set to a k-th characteristic that is suitable for the purpose of reducing the resistance of the object OBJ to the fluid flowing at a k-the flow speed. For example, the fluid may flow at each of at least a first flow speed and a second flow speed that is different from the first flow speed. In this case, the characteristic of the first type of riblet structure RB that is formed on the first riblet sheet 1a-1 may be set to a first characteristic that is suitable for the purpose of reducing the resistance of the object OBJ to the fluid flowing at the first flow speed. On the other hand, the characteristic of the second type of riblet structure RB that is formed on the second riblet sheet 1a-2 may be set to a second characteristic that is suitable for the purpose of reducing the resistance of the object OBJ to the fluid flowing at the second flow speed. As a result, the riblet sheet 1a-1 properly reduces the fluid resistance of the object OBJ under a movement environment in which the fluid flows at the first flow speed, and the riblet sheet 1a-2 also properly reduces the fluid resistance of the object OBJ under a movement environment in which the fluid flows at the second flow speed. Therefore, in a case where the third characteristic setting method is used, the object OBJ, to which the riblet sheet 1a is attached, can properly achieve the resistance reduction effect provided by the riblet sheet 1a in a situation where the flow speed of the fluid flowing around the object OBJ, to which the riblet sheet 1a is attached, changes.

In a case where the movement environment of the object OBJ includes the flow speed of the object OBJ, the total areal size of the k-th surface Os-k, to which the k-th riblet sheet 1a-k is attached, on the surface of the object OBJ may be set based on the frequency with which the object OBJ moves in the fluid, which flows at a k-th flow speed, in the predetermined period. For example, the total areal size of the k-th surface Os-k and the total areal size of the m-th surface Os-m may be set based on the frequency with which the object OBJ moves in the fluid, which flows at a k-th flow speed, in the predetermined period and the frequency with which the object OBJ moves in the fluid, which flows at a m-th flow speed, in the predetermined period. More specifically, the ratio of the total areal size of the k-th surface Os-k and the total areal size of the m-th surface Os-m may be set based on the ratio of the frequency with which the object OBJ moves in the fluid, which flows at the k-th flow speed, in the predetermined period and the frequency with which the object OBJ moves in the fluid, which flows at the m-th flow speed, in the predetermined period. As one example, the total areal size of the k-th surface Os-k and the total areal size of the m-th surface Os-m may be set so that the ratio of the total areal size of the k-th surface Os-k and the total areal size of the m-th surface Os-m is equal to or is proportional to the ratio of the frequency with which the object OBJ moves in the fluid, which flows at the k-th flow speed, in the predetermined period to the frequency with which the object OBJ moves in the fluid, which moves at the m-th flow speed, in the predetermined period. In this case, in a case where the frequency with which the object OBJ moves in the fluid, which moves at the k-th flow speed, in the predetermined period is higher than the frequency with which the object OBJ moves in the fluid, which moves at the m-th flow speed, in the predetermined period, the total areal size of the k-th surface Os-k may be larger than the total areal size of the m-th surface Os-m. On the other hand, in a case where the frequency with which the object OBJ moves in the fluid, which moves at the k-th flow speed, in the predetermined period is lower than the frequency with which the object OBJ moves in the fluid, which moves at the m-th flow speed, in the predetermined period, the total areal size of the k-th surface Os-k may be smaller than the total areal size of the m-th surface Os-m. As a result, the object OBJ to which the riblet sheet 1a is attached can achieve the resistance reduction effect provided by the riblet sheet 1a more effectively.

### (1-3-2-4) Other Example of Method for Setting Characteristic of Riblet Structure RB Formed on Riblet Sheet 1a

In a case where the object OBJ is the railway vehicle, there is a possibility that a first surface part, which is positioned on a left side relative to a movement direction of the railway vehicle during an outward journey, of a surface of the railway vehicle is positioned on a right side relative to the movement direction of the railway vehicle during a return journey. Similarly, there is a possibility that a second surface part, which is positioned on a right side relative to the movement direction of the railway vehicle during the outward journey, of a surface of the railway vehicle is positioned on a right side relative to the movement direction of the railway vehicle during the return journey. In this case, the characteristic of the riblet structure RB formed on the riblet sheet 1a attached to the first surface part may be different from the characteristic of the riblet structure RB formed on the riblet sheet 1a attached to the second surface part.

For example, there is a possibility that a frequency with which the railway vehicle moves on a right curve during the outward journey is different from a frequency with which the railway vehicle moves on a right curve during the return journey. Similarly, there is a possibility that a frequency with which the railway vehicle moves on a left curve during the outward journey is different from a frequency with which the railway vehicle moves on a left curve during the return journey. Specifically, there is a possibility that the frequency with which the railway vehicle moves on the right curve during the outward journey is usually the same as the frequency with which the railway vehicle moves on the left curve during the return journey. Similarly, there is a possibility that the frequency with which the railway vehicle moves on the left curve during the outward journey is usually the same as the frequency with which the railway vehicle moves on the right curve during the return journey. Therefore, the characteristic of the riblet structure RB of the riblet sheet 1a attached to the first surface part of the surface of the railway vehicle and the characteristic of the riblet structure RB of the riblet sheet 1a attached to the second surface part of the surface of the railway vehicle may be set based on the frequency with which the railway vehicle moves on the right curve during each of the outward journey and the return journey and the frequency with which the railway vehicle moves on the right curve during each of the outward journey and the return journey. Furthermore, the ratio of the plurality of types of riblet sheets 1a (for example, the ratio of the total areal size of the first riblet sheet 1a-1 and the total areal size of the second riblet sheet 1a-2 described above) attached to the first the first surface part of surface of the railway vehicle and the ratio of the plurality of types of riblet sheets 1a attached to the first the second surface part of surface of the railway vehicle may be set based on the frequency with which the railway vehicle moves on the right curve during each of the outward journey and the return journey and the frequency with which the railway vehicle moves on the right curve during each of the outward journey and the return journey. For example, the ratio of the plurality of types of riblet sheets 1a attached to the first surface part of the surface of the railway vehicle and the ratio of the plurality of types of riblet sheets 1a attached to the second surface part of the surface of the railway vehicle may be set to be different from each other.

Moreover, in a case where the object OBJ is the railway vehicle, there is a possibility that the object OBJ includes a plurality of train cars. In this case, the characteristics of the riblet structures RB of the plurality of riblet sheets 1a, which are attached to the plurality of train cars, respectively, may be set so that the characteristic of the riblet structure RB of the riblet sheet 1a attached to one train car (for example, a lead train car) is different from the characteristic of the riblet structure RB of the riblet sheet 1a attached to another train car (for example, a second train car). Furthermore, the ratio of the plurality of types of riblet sheets 1a, which are attached to the train cars, respectively, may be set so that the ratio of the plurality of types of riblet sheets 1a (for example, the ratio of the total areal size of the first riblet sheet 1a-1 and the total areal size of the second riblet sheet 1a-2 described above) attached to the one train car (for example, the lead train car) is different from the ratio of the plurality of types of riblet sheets 1a attached to another train car (for example, a second train car).

Note that a plurality of automobiles (especially, trucks that are large freight vehicles) traveling in convoy on a road may be regarded as the object OBJ. Namely, the object OBJ may include the plurality of automobiles. Even in this case, the characteristic of the riblet structure RB of the riblet sheet 1a attached to each of the plurality of automobiles included in the object OBJ may be set as in a case where the railway vehicle, which is one example of the object OBJ, includes the plurality of train cars.

Moreover, in a case where the object OBJ is the vehicle, there is a possibility that the object OBJ is subject to crosswinds in a direction intersecting the movement direction of the object OBJ. In this case, the characteristic of the riblet structure RB of the riblet sheet 1a may be set based on the crosswinds.

### (1-3-3) Shapes of Plurality of Riblet Sheets 1a

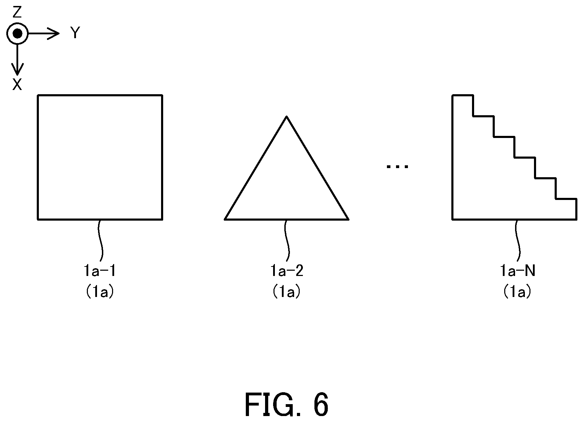

The shapes (for example, the shapes in a planar view) of the plurality of riblet sheets 1a, on which the plurality of types of riblet structures RB are formed, respectively, may be different from each other. Namely, the shape of each riblet sheet 1a may be a shape that is unique to the characteristic of the riblet structure RB formed on each riblet sheet 1a. For example, as illustrated in FIG. 6, the shape of a first riblet sheet 1a-1, on which a first type of riblet structure RB is formed, the shape of a second riblet sheet 1a-2, on which a second type of riblet structure RB is formed, ..., and the shape of a N-th riblet sheet 1a-N, on which a N-th type of riblet structure RB is formed, may be different from each other. Namely, as illustrated in FIG. 6, the shape of the first riblet sheet 1a-1, on which the first type of riblet structure RB is formed, may be a first shape; the shape of the second riblet sheet 1a-2, on which the second type of riblet structure RB is formed, may be a second shape that is different from the first shape; ..., and the shape of the N-th riblet sheet 1a-N, on which the N-th type of riblet structure RB is formed, may be a N-th shape that is different from the first shape to a (N-1)-th shape.

In this case, the plurality of riblet sheets 1a, on which the plurality of types of riblet structures RB are formed, respectively, are distinguishable from each other by their shapes. As a result, the riblet sheet 1a, which is different from the first riblet sheet 1a-1 on which the first type of riblet structure RB is formed, is not mistakenly attached to the first surface Os-1 to which the first riblet sheet 1a-1, on which the first type of riblet structure RB is formed, should be attached. Namely, an attachment error of the riblet sheet 1a can be prevented.

### (2) Riblet Sheet 1 in Second Example Embodiment

Next, a riblet sheet 1 in a second example embodiment will be described. Note that the riblet sheet 1 in the second example embodiment is referred to as a riblet sheet 1b in the below-described description. Moreover, in the below-described description, the riblet sheet 1a in the second example embodiment will be described by mainly describing a difference between the riblet sheet 1b in the second example embodiment and the riblet sheet 1a in the first example embodiment. Therefore, the riblet sheet 1b in the second example embodiment may have a feature that is the same as a feature of the riblet sheet 1a in the first example embodiment in a case where there is no specific description.

### (2-1) Overview of Riblet Sheet 1b in Second Example Embodiment

The riblet sheet 1b in the second example embodiment is different from the riblet sheet 1a in the first example embodiment in that the plurality of types of riblet structures RB, whose characteristics are different from each other, may be formed on a single riblet sheet 1b. In the second example embodiment, the plurality of riblet sheets 1b, on each of which the plurality of types of riblet structures RB whose characteristics are different from each other are formed, may be attached to the object OBJ. However, only one riblet sheet 1b, on which the plurality of types of riblet structures RB whose characteristics are different from each other are formed, may be attached to the object OBJ. Furthermore, at least one riblet sheet 1b and at least one riblet sheet 1a may be attached to the object OBJ. Other feature of the riblet sheet 1b may be the same as other feature of the riblet sheet 1a.

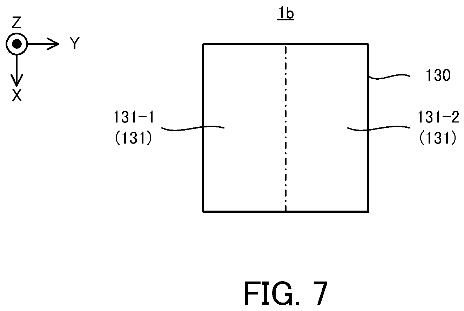

Specifically, as illustrated in FIG. 7 that is a plan view illustrating the riblet sheet 1b in the second example embodiment, the riblet structure surface 130 of the riblet sheet 1b includes: a partial structure surface 131 (a first partial structure surface 131-1) on which a first type of riblet structure RB having a first characteristic; a partial structure surface 131 (a second partial structure surface 131-2) on which a second type of riblet structure RB having a second characteristic that is different from the first characteristic; ..., and a partial structure surface 131 (a N-th partial structure surface 131-N) on which a N-the type of riblet structure RB having a N-th characteristic that is different form the first characteristic to a (N-1)-th characteristic. For example, the riblet structure surface 130 of riblet sheet 1b may include at least one first partial structure surface 131-1, at least one second partial structure surface 131-2, ..., and at least one N-th partial structure surface 131-N. Namely, the riblet structure surface 130 of the riblet sheet 1b may include one or more first partial structure surfaces 131-1, one or more second partial structure surfaces 131-2, ..., and one or more N-th partial structure surfaces 131-N. Note that the constant number N in the second example embodiment (namely, the number of partial structure surfaces 131) may be the same as or may be different from the constant number N in the first example embodiment (namely, the number of types of riblet sheets 1a attached to the object OBJ). Namely, the first type of riblet structure RB having the first characteristic, the second type of riblet structure RB having the second characteristic, ..., and the N-th type of riblet structure RB having the N-th characteristic may be formed on the riblet structure surface 130 of the riblet sheet 1b.

Note that FIG. 7 illustrates an example in which the riblet structure surface 130 includes the first partial structure surface 131-1, on which the first type of riblet structure RB having the first characteristic is formed, and the second partial structure surface 131-2, on which the second type of riblet structure RB having the second characteristic is formed. Namely, FIG. 7 illustrates an example in which the first type of riblet structure RB having the first characteristic and the second type of riblet structure RB having the second characteristic are formed on the riblet structure surface 130. Even in the below-described description, the example in which the riblet structure surface 130 includes the first partial structure surface 131-1 and the second partial structure surface 131-2 will be described for the simplicity of description. Namely, in the below-described description, the example in which two types of riblet structures RB whose characteristics are different from each other are formed on the single riblet sheet 1b will be described. However, three or more types of riblet structures RB whose characteristics are different from each other may be formed on the single riblet sheet 1b.

Moreover, FIG. 7 illustrates an example in which the riblet structure surface 130 includes a single first partial structure surface 131-1 and a single second partial structure surface 131-2. Namely, FIG. 7 illustrates an example in which the riblet structure surface 130 includes only a single first partial structure surface 131-1 and a single second partial structure surface 131-2. However, the riblet structure surface 130 may include a plurality of first partial structure surfaces 131-1. The riblet structure surface 130 may include a plurality of second partial structure surfaces 131-2. Even in this case, the riblet structure surface 130 still includes one first partial structure surface 131-1 of the plurality of first partial structure surfaces 131-1 and one second partial structure surface 131-2 of the plurality of second partial structure surfaces 131-2. For example, the riblet structure surface 130 still includes the first partial structure surface 131-1 and the second partial structure surface 131-2 that are adjacent to each other.

A size of each partial structure surface 131 may be set to a desired size that allows at least a dozen to several tens convex structures 191 to be arranged in each partial structure surface 131 along the predetermined arrangement direction. As one example, the partial structure surface 131 may have a size of at least several tens of micrometers to several hundred micrometers along the arrangement direction of the convex structures 191. However, the partial structure surface 131 may have a size of at least several millimeters to several meters along the arrangement direction of the convex structures 191.

Even in the second example embodiment, the characteristic of the riblet structure RB may include at least one of the pitch P_rb of the convex structures 191, the height H_rb of the convex structures 191, and the extension direction of the convex structures 191, as in the first example embodiment.

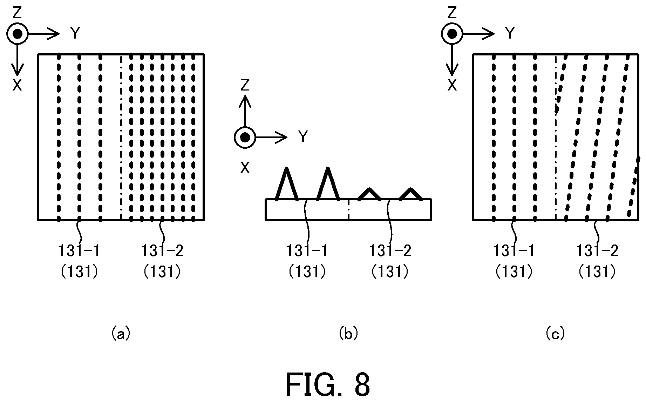

As a first example, as illustrated in FIG. 8(a), the riblet structure RB, in which the plurality of convex structures 191 are arranged at a first pitch P_rb, may be formed on the first partial structure surface 131-1. On the other hand, the riblet structure RB, in which the plurality of convex structures 191 are arranged at a second pitch P_rb that is different from the first pitch P_rb, may be formed on the second partial structure surface 131-2. Note that the height H_rb of the convex structure 191 formed on the first partial structure surface 131-1 may be the same as or may be different from the height H_rb of the convex structure 191 formed on the second partial structure surface 131-2. The extension direction of the convex structure 191 formed on the first partial structure surface 131-1 may be the same as or different from the extension direction of the convex structure 191 formed on the second partial structure surface 131-2.

Note that at least one convex structure 191 formed on the first partial structure surface 131-1 may be connected to at least one convex structure formed on the second partial structure surface 131-2 in a case where the first partial structure surface 131-1 and the second partial structure surface 131-2 are arranged along the extension direction of the convex structure 191. In this case, the pitch P_rb of the convex structure 191 may gradually change near a boundary between the first structure surface 131-1 and the second structure surface 131-2 so that at least one convex structure 191 formed on the first structure surface 131-1 is smoothly connected to at least one convex structure formed on the second structure surface 131-2. In this case, it is possible to prevent the pitch P_rb of the convex structure 191 to suddenly change at the boundary between the first partial structure surface 131-1 and the second partial structure surface 131-2.

As a second example, as illustrated in FIG. 8(b), the riblet structure RB, which includes the convex structure 191 having a first height H_rb, may be formed on the first partial structure surface 131-1. On the other hand, the riblet structure RB, which includes the convex structure 191 having a second height H_rb that is different from the first height H_rb, may be formed on the second partial structure surface 131-2. Note that the pitch P_rb of the convex structure 191 formed on the first partial structure surface 131-1 may be the same as or may be different from the pitch P_rb of the convex structure 191 formed on the second partial structure surface 131-2. The extension direction of the convex structure 191 formed on the first partial structure surface 131-1 may be the same as or different from the extension direction of the convex structure 191 formed on the second partial structure surface 131-2.

At least one convex structure 191 formed on the first partial structure surface 131-1 may be connected to at least one convex structure formed on the second partial structure surface 131-2 as described above in a case where the first partial structure surface 131-1 and the second partial structure surface 131-2 are arranged along the extension direction of the convex structure 191. In this case, the height H_rb of the convex structure 191 may gradually change near a boundary between the first structure surface 131-1 and the second structure surface 131-2 so that at least one convex structure 191 formed on the first structure surface 131-1 is smoothly connected to at least one convex structure formed on the second structure surface 131-2. In this case, it is possible to prevent the height H_rb of the convex structure 191 to suddenly change at the boundary between the first partial structure surface 131-1 and the second partial structure surface 131-2.

As a third example, as illustrated in FIG. 8(c), the riblet structure RB, which includes the convex structure 191 extending along a first extension direction, may be formed on the first partial structure surface 131-1. On the other hand, the riblet structure RB, which includes the convex structure 191 extending along a second extension direction that is different form the first extension direction, may be formed on the second partial structure surface 131-2. Note that the pitch P_rb of the convex structure 191 formed on the first partial structure surface 131-1 may be the same as or may be different from the pitch P_rb of the convex structure 191 formed on the second partial structure surface 131-2. The height H_rb of the convex structure 191 formed on the first partial structure surface 131-1 may be the same as or different from the height H_rb of the convex structure 191 formed on the second partial structure surface 131-2.

As described above in a case where the first partial structure surface 131-1 and the second partial structure surface 131-2 are arranged along the extension direction of the convex structure 191. In this case, the extension direction of the convex structure 191 may gradually change near a boundary between the first structure surface 131-1 and the second structure surface 131-2 so that at least one convex structure 191 formed on the first structure surface 131-1 is smoothly connected to at least one convex structure formed on the second structure surface 131-2. In this case, it is possible to prevent the extension direction of the convex structure 191 to suddenly change at the boundary between the first partial structure surface 131-1 and the second partial structure surface 131-2.

### (2-2) Arrangement Pattern of Plurality of Partial Structure Surface 131 in Riblet Sheet 1b

The plurality of partial structure surfaces 131 (for example, the first partial structure surface 131-1 and the second partial structure surface 131-2) may be arranged in any arrangement pattern on the riblet sheet 1b. For example, a plurality of first partial structure surfaces 131-1 and a plurality of second partial structure surfaces 131-2 may be arranged on the riblet sheet 1b. For example, a single first partial structure surface 131-1 and a single second partial structure surface 131-2 may be arranged on the riblet sheet 1b. For example, a plurality of first partial structure surfaces 131-1 and a single second partial structure surface 131-2 may be arranged on the riblet sheet 1b. For example, a single first partial structure surface 131-1 and a plurality of second partial structure surfaces 131-2 may be arranged on the riblet sheet 1b.

The plurality of partial structure surfaces 131 (for example, the first partial structure surface 131-1 and the second partial structure surface 131-2) may be arranged in a random arrangement pattern on the riblet sheet 1b. Alternatively, the plurality of partial structure surfaces 131 (for example, the first partial structure surface 131-1 and the second partial structure surface 131-2) may be arranged in a periodic arrangement pattern (in other words, a regular arrangement pattern) on the riblet sheet 1b.

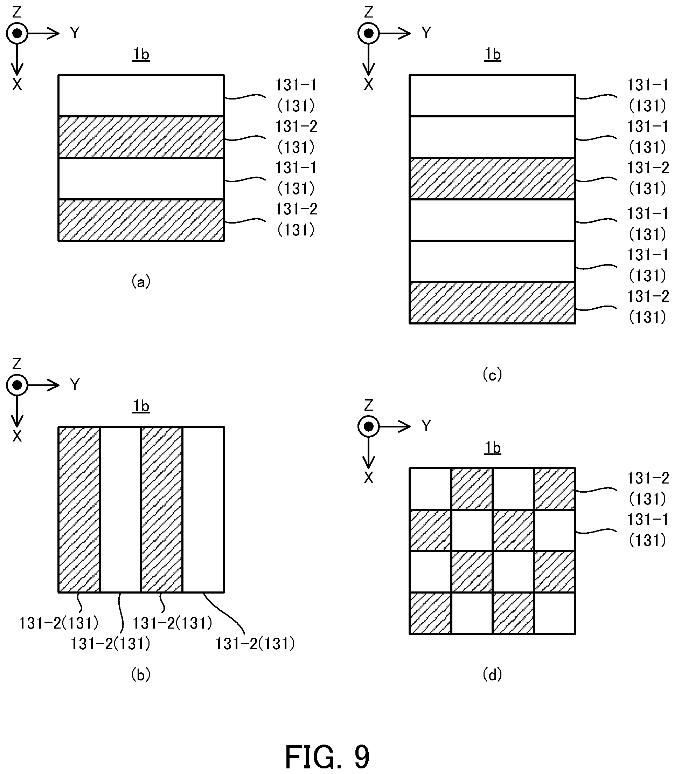

One example of the plurality of partial structure surfaces 131 (specifically, the plurality of first partial structure surfaces 131-1 and the plurality of second partial structure surfaces 131-2) arranged in the periodic arrangement pattern is illustrated in FIG. 9(a) to FIG. 9(d).

For example, as illustrated in FIG. 9(a) to FIG. 9(c), each partial structure surface 131 may have a shape in which a direction along the riblet structure surface 130 is its longitudinal direction. The direction along the riblet structure surface 130 may be a direction along the XY plane, for example. The direction along the riblet structure surface 130 may be a direction intersecting the height direction of the convex structure 191, for example. Eacho of FIG. 9(a) and FIG. 9(c) illustrates an example in which each partial structure surface 131 has a shape in which the Y-axis direction, which is the width direction of the riblet sheet 1b (namely, the arrangement direction of the plurality of convex structures 191), is its longitudinal direction. FIG. 9(b) illustrates an example in which each partial structure surface 131 has a shape in which the X-axis direction, which is the length direction of the riblet sheet 1b (namely, the extension direction of the convex structure 191), is its longitudinal direction.

Note that the riblet sheet 1b may be attached to the object OBJ so that the longitudinal direction of the partial structure surface 131(namely, the extension direction of the convex structure 191) becomes a direction including a directional component along a direction of a streamline on a surface part of the surface of the object OBJ to which the riblet sheet 1b is attached in a case where the longitudinal direction of the partial structure surface 131 is a direction that is the same as the extension direction of the convex structure 191 as illustrated in FIG. 9(b). In this case, the object OBJ to which the riblet sheet 1b is attached can achieve the resistance reduction effect more properly, compared to a case where the longitudinal direction of the partial structure surface 131 (namely, the extension direction of the convex structural member 191) intersects the direction of the streamline.

Furthermore, as illustrated in FIG. 9(a) and FIG. 9(b), the plurality of partial structure surfaces 131(specifically, the plurality of first partial structure surfaces 131-1 and the plurality of second partial structure surfaces 131-2) may be positioned so that the first partial structure surfaces 131-1 and the second partial structure surfaces 131-2 are alternately arranged along one direction intersecting the longitudinal direction of the partial structure surface 131. Note that an arrangement pattern in which the first partial structure surfaces 131-1 and the second partial structure surfaces 131-2 are alternately arranged along the one direction may be referred to as a stripe pattern. FIG. 9(a) illustrates an example in which the plurality of partial structure surfaces 131 are positioned so that the first partial structure surface 131-1 and the second partial structure surface 131-2 are alternately arranged along the X-axis direction intersecting the longitudinal direction of the partial structure surface 131. FIG. 9(b) illustrates an example in which the plurality of partial structure surfaces 131 are positioned so that the first partial structure surface 131-1 and the second partial structure surface 131-2 are alternately arranged along the Y-axis direction intersecting the longitudinal direction of the partial structure surface 131.

Alternatively, as illustrated in FIG. 9(c), the plurality of partial structure surfaces 131 (specifically, the plurality of first partial structure surfaces 131-1 and the plurality of second partial structure surfaces 131-2) may be positioned so that a predetermined number of first partial structure surfaces 131-1 and a predetermined number of second partial structure surfaces 131-2 are alternately arranged along a direction intersecting the longitudinal direction of the partial structure surfaces 131. Note that an arrangement pattern in which the predetermined number of first partial structure surfaces 131-1 and the predetermined number of second partial structure surfaces 131-2 are alternately arranged along the one direction may be also referred to as a stripe pattern. FIG. 9(c) illustrates an example in which two first partial structure surfaces 131-1 and one second partial structure surface 131-2 are alternately arranged along one direction intersecting the longitudinal direction of the partial structure surface 131.

Alternatively, as illustrated in FIG. 9(d), the plurality of structure surfaces 131 may be positioned so that the first structure surface 131-1 and the second structure surface 131-2 are alternately arranged along each of a first direction, which is along the riblet structure surface 130, and a second direction, which is perpendicular to the first direction and which is along the riblet structure surface 130. Note that an arrangement pattern in which the first partial structure surface 131-1 and the second partial structure surface 131-2 are alternately arranged along each of the first direction and the second direction may be referred to as a grid pattern. FIG. 9(c) illustrates an example in which the plurality of partial structure surfaces 131 are positioned so that the first partial structure surface 131-1 and the second partial structure surface 131-2 are alternately arranged along each of the X-axis direction and the Y-axis direction.

Note that each of FIG. 9(a) to FIG. 9(d) illustrates an example in which the shape (specifically, the shape in the planar view) of the first partial structure surface 131-1 is the same as the shape (specifically, the shape in the planar view) of the second partial structure surface 131-2. However, the shape (specifically, the shape in the planar view) of the first partial structure surface 131-1 may be different from the shape (specifically, the shape in the planar view) of the second partial structure surface 131-2.

### (2-3) Method for Setting Characteristic of Riblet Structure RB Formed on Riblet Sheet 1b

Even in the second example embodiment, the characteristic of the riblet structure RB formed on the riblet sheet 1b may be set by using a method that is the same as the method for setting the characteristic of the riblet structure RB formed on the riblet sheet 1a in the first example embodiment. Next, the method for setting the characteristic of the riblet structure RB formed on riblet sheet 1b will be described.

### (2-3-1) First Example of Method for Setting Characteristic of Riblet Structure RB Formed on Riblet Sheet 1b (First Characteristic Setting Method)

According to a first characteristic setting method, the characteristic of a k-th type of riblet structure RB that is formed on a k-th partial structure surface 131-k (wherein k is the variable number representing the integer of that is equal to or greater than 1 and that is equal to or less than the constant number N as described in the first example embodiment) may be set to a k-th characteristic that is suitable for the purpose of reducing the fluid resistance of a k-th object surface that is a part of the surface of the object OBJ. For example, the pitch P_rb of the convex structure 191 that is formed on the k-th partial structure surface 131-k of the riblet sheet 1b may be set to a k-th pitch P_rb that is suitable for the purpose of reducing the fluid resistance of the k-th object surface of the object OBJ. For example, the height H_rb of the convex structure 191 that is formed on the k-th partial structure surface 131-k of the riblet sheet 1b may be set to a k-th height H_rb that is suitable for the purpose of reducing the fluid resistance of the k-th object surface of the object OBJ. For example, the extension direction of the convex structure 191 that is formed on the k-th partial structure surface 131-k of the riblet sheet 1b may be set to a k-th extension direction that is suitable for the purpose of reducing the fluid resistance of the k-th object surface of the object OBJ. The k-th extension direction may be a direction including a directional component that is along a direction of a streamline on the k-th object surface (namely, a flow direction of the fluid on the k-th object surface).

As one example, the characteristic of a first type of riblet structure RB that is formed on the first partial structure surface 131-1 may be set to a first characteristic that is suitable for the purpose of reducing the fluid resistance of a first object surface that is a part of the surface of the object OBJ. For example, the characteristic of a second type of riblet structure RB that is formed on the second partial structure surface 131-2 may be set to a second characteristic that is suitable for the purpose of reducing the fluid resistance of a second object surface that is a part of the surface of the object OBJ and that is different form the first object surface. In this case, at least one riblet sheet 1b on which both the first and second types of riblet structures RB are formed may be attached to each of the first object surface and the second object surface..

Here, in a case the riblet sheet 1b on which the first type of riblet structure RB is formed but the second type of riblet structure RB is not formed (namely, which includes the first partial structure surface 131-1 but does not include the second partial structure surface 131-2) is attached to each of the first object surface and the second object surface, there is a possibility that the fluid resistance of the first object surface is properly reduced but the fluid resistance of the second object surface is not properly reduced. Similarly, in a case the riblet sheet 1b on which the second type of riblet structure RB is formed but the first type of riblet structure RB is not formed (namely, which includes the second partial structure surface 131-2 but does not include the first partial structure surface 131-1) is attached to each of the first object surface and the second object surface, there is a possibility that the fluid resistance of the second object surface is properly reduced but the fluid resistance of the first object surface is not properly reduced. However, according to the first characteristic setting method, the riblet sheet 1b on which both the first and second types of riblet structures RB are formed (namely, which includes both the first partial structure surface 131-1 and the second partial structure surface 131-2) is attached to each of the first object surface and the second object surface. Therefore, the fluid resistance of the first object surface is properly reduced by the first type of riblet structure RB, and the fluid resistance of the second object surface OS-2 is properly reduced by the second type of riblet structure RB. Therefore, in a case where the first characteristic setting method is used, the object OBJ to which the riblet sheet 1b is attached can properly achieve a resistance reduction effect provided by the riblet sheet 1b (namely, an effect of reducing the fluid resistance of the surface of the object OBJ, to which the riblet sheet 1b is attached).

### (2-3-2) Second Example of Method for Setting Characteristic of Riblet Structure RB Formed on Riblet Sheet 1b (Second Characteristic Setting Method)

According to a second characteristic setting method, the characteristic of the k-th type of riblet structure RB that is formed on the k-th partial structure surface 131-k of the riblet sheet 1b may be set to a k-th characteristic that is suitable for the purpose of reducing the fluid resistance of the object OBJ, which moves in a k-th movement aspect. For example, the pitch P_rb of the convex structure 191 that is formed on the k-th partial structure surface 131-k of the riblet sheet 1b may be set to a k-th pitch P_rb that is suitable for the purpose of reducing the fluid resistance of the object OBJ, which moves in the k-th movement aspect. For example, the height H_rb of the convex structure 191 that is formed on the k-th partial structure surface 131-k of the riblet sheet 1b may be set to a k-th height H_rb that is suitable for the purpose of reducing the fluid resistance of the object OBJ, which moves in the k-th movement aspect. For example, the extension direction of the convex structure 191 that is formed on the k-th partial structure surface 131-k of the riblet sheet 1b may be set to a k-th extension direction that is suitable for the purpose of reducing the fluid resistance of the object OBJ, which moves in the k-th movement aspect.

In a case where the second characteristic setting method is used, the object OBJ may be movable in each of a first movement aspect, a second movement aspect that is different from the first movement aspect, ... , and a N-th movement aspect that is different from the first to (N-1)-th movement aspects. In this case, the characteristic of the first type of riblet structure RB that is formed on the first partial structure surface 131-1 may be set to a first characteristic that is suitable for reducing the fluid resistance of the object OBJ, which moves in the first movement aspect. The characteristic of the second type of riblet structure RB that is formed on the second partial structure surface 131-2 may be set to a second characteristic that is suitable for reducing the fluid resistance of the object OBJ, which moves in the second movement aspect. The characteristic of the N-th type of riblet structure RB that is formed on the N-th partial structure surface 131-N may be set to a N-th characteristic that is suitable for reducing the fluid resistance of the object OBJ, which moves in the N-th movement aspect.

As one example, the object OBJ may be movable at least in each of the first movement aspect and the second movement aspect. In this case, the characteristic of the first type of riblet structure RB that is formed on the first partial structure surface 131-1 may be set to the first characteristic that is suitable for reducing the fluid resistance of the object OBJ, which moves in the first movement aspect. On the other hand, characteristic of the second type of riblet structure RB that is formed on the second partial structure surface 131-2 may be set to the second characteristic that is suitable for reducing the fluid resistance of the object OBJ, which moves in the second movement aspect.

Here, in a case where the riblet sheet 1b on which the first type of riblet structure RB is formed but the second type of riblet structure RB is not formed (namely, which includes the first partial structure surface 131-1 but does not include the second partial structure surface 131-2) is attached to the surface of the object OBJ, there is a possibility that the fluid resistance of the object OBJ, which moves in the first movement aspect, is properly reduced but the fluid resistance of the object OBJ, which moves in the second movement aspect, is not properly reduced. Similarly, in a case the riblet sheet 1b on which the second type of riblet structure RB is formed but the first type of riblet structure RB is not formed (namely, which includes the second partial structure surface 131-2 but does not include the first partial structure surface 131-1) is attached to the surface of the object OBJ, there is a possibility that the fluid resistance of the object OBJ, which moves in the second movement aspect, is properly reduced but the fluid resistance of the object OBJ, which moves in the first movement aspect, is not properly reduced. However, according to the second characteristic setting method, the riblet sheet 1b on which both the first and second types of riblet structures RB are formed (namely, which includes both the first partial structure surface 131-1 and the second partial structure surface 131-2) is attached to the surface of the object OBJ. Therefore, the first type of riblet structure RB properly reduces the flid resistance of the object OBJ, which moves in the first movement aspect, and the second type of riblet structure RB properly reduces the fluid resistance of the object OBJ, which moves in the second movement aspect. Therefore, in a case where the second characteristic setting method is used, the resistance reduction effect provided by the riblet sheet 1b is properly achievable in a situation where the object OBJ, to which the riblet sheet 1b is attached, moves in various movement aspects. Namely, the resistance reduction effect provided by the riblet sheet 1b is properly achievable in a situation where the movement aspect of the object OBJ, to which the riblet sheet 1b is attached, changes.

A total areal size of the k-th partial structure surface 131-k, on which the k-th type of riblet structure RB is formed, on the surface of the object OBJ may be set based on a frequency with which the object OBJ moves in the k-th movement aspect in a predetermined period. Especially, the total areal size of the k-th partial structure surface 131-k, on which the k-th type of riblet structure RB is formed, on the surface of the object OBJ and a total areal size of a m-th partial structure surface 131-k (wherein m is the variable number representing the integer that is equal to or greater than 1, that is equal to or less than the constant number N, and that is different from the variable number k, as described in the first example embodiment), on which a m-th type of riblet structure RB is formed, on the surface of the object OBJ may be set based on the frequency with which the object OBJ moves in the k-th movement aspect in the predetermined period and a frequency with which the object OBJ moves in a m-th movement aspect in the predetermined period. More specifically, a ratio of the total areal size of the k-th partial structure surface 131-k and the total areal size of the m-th partial structure surface 131-k may be set based on a ratio of the frequency with which the object OBJ moves in the k-th movement aspect in the predetermined period and the frequency with which the object OBJ moves in the m-th movement aspect in the predetermined period. As one example, the total areal size of the k-th partial structure surface 131-k and the total areal size of the m-th partial structure surface 131-m may be set so that the ratio of the total areal size of the k-th partial structure surface 131-k and the total areal size of the m-th partial structure surface 131-m is equal to or is proportional to the ratio of the frequency with which the object OBJ moves in the k-th movement aspect in the predetermined period to the frequency with which the object OBJ moves in the m-th movement aspect in the predetermined period.

As one example, an example in which the variable number k is 1 and the variable number m is 2 will be described. In this case the total areal size of the first partial structure surface 131-1, on which the first type of riblet structure RB is formed, on the surface of the object OBJ and the total areal size of the second partial structure surface 131-2, on which the second type of riblet structure RB is formed, on the surface of the object OBJ may be set based on the frequency with which the object OBJ moves in the first movement aspect in the predetermined period and the frequency with which the object OBJ moves in the second movement aspect in the predetermined period. More specifically, the ratio of the total areal size of the first partial structure surface 131-1 and the total areal size of the second partial structure surface 131-2 may be set based on the ratio of the frequency with which the object OBJ moves in the first movement aspect in the predetermined period and the frequency with which the object OBJ moves in the second movement aspect in the predetermined period.

For example, the total areal size of the first partial structure surface 131-1 and the toral areal size of the second partial structure surface 131-2 may be set so that the ratio of the total areal size of the first partial structure surface 131-1 and the total areal size of the second partial structure surface 131-2 is equal to or is proportional to the ratio of the frequency with which the object OBJ moves in the first movement aspect in the predetermined period and the frequency with which the object OBJ moves in the second movement aspect in the predetermined period. In this case, in a case where the frequency with which the object OBJ moves in the first movement aspect in the predetermined period is higher than the frequency with which the object OBJ moves in the second movement aspect in the predetermined period, the total areal size of the first partial structure surface 131-1 may be larger than the total areal size of the second partial structure surface 131-2. As a result, the effect of reducing the fluid resistance of the object OBJ, which moves in the first movement aspect in which it moves with higher frequency, is greater than the effect of reducing the fluid resistance of the object OBJ, which moves in the second movement aspect in which it moves with lower frequency, compared to a case where the total areal size of the first partial structure surface 131-1 is smaller than the total areal size of the second partial structure surface 131-2. Therefore, the object OBJ to which the riblet sheet 1b is attached can achieve the resistance reduction effect provided by the riblet sheet 1b more effectively. On the other hand, in a case where the frequency with which the object OBJ moves in the first movement aspect in the predetermined period is lower than the frequency with which the object OBJ moves in the second movement aspect in the predetermined period, the total areal size of the first partial structure surface 131-1 may be smaller than the total areal size of the second partial structure surface 131-2. As a result, the effect of reducing the fluid resistance of the object OBJ, which moves in the second movement aspect in which it moves with higher frequency, is greater than the effect of reducing the fluid resistance of the object OBJ, which moves in the first movement aspect in which it moves with lower frequency, compared to a case where the total areal size of the first partial structure surface 131-1 is larger than the total areal size of the second partial structure surface 131-2. Therefore, the object OBJ to which the riblet sheet 1b is attached can achieve the resistance reduction effect provided by the riblet sheet 1b more effectively.

Even in the second example embodiment, the movement aspect of the object OBJ may include the movement speed of the object OBJ, as in the first example embodiment. In this case, the characteristic of the k-th type of riblet structure RB that is formed on the k-th partial structure surface 131-k of the riblet sheet 1b may be set to a k-th characteristic that is suitable for the purpose of reducing the fluid resistance of the object OBJ, which moves at a k-th movement speed. For example, the object OBJ may be movable at each of at least a first movement speed and a second movement speed that is different from the first movement speed. In this case, the characteristic of the first type of riblet structure RB that is formed on the first partial structure surface 131-1 may be set to a first characteristic that is suitable for the purpose of reducing the fluid resistance of the object OBJ, which moves at the first movement speed. On the other hand, the characteristic of the second type of riblet structure RB that is formed on the second partial structure surface 131-2 may be set to a second characteristic that is suitable for the purpose of reducing the fluid resistance of the object OBJ, which moves at the second movement speed. As a result, the first type of riblet structure RB properly reduces the fluid resistance of the object OBJ, which moves at the first movement speed, and the second type of riblet structure RB also properly reduces the fluid resistance of the object OBJ, which moves at the second movement speed. Therefore, in a case where the second characteristic setting method is used, the resistance reduction effect provided by the riblet sheet 1b is properly achievable in a situation where the object OBJ, to which the riblet sheet 1b is attached, moves at various speeds. Namely, the resistance reduction effect provided by the riblet sheet 1b is properly achievable in a situation where the movement speed of the object OBJ, to which the riblet sheet 1b is attached, changes.

In a case where the movement aspect of the object OBJ includes the movement speed of the object OBJ, the total areal size of the k-th partial structure surface 131-k, on which the k-th type of riblet structure RB is formed, on the surface of the object OBJ may be set based on the frequency with which the object OBJ moves at the k-th movement speed in the predetermined period. For example, the total areal size of the k-th partial structure surface 131-k and the total areal size of the m-th partial structure surface 131-m may be set based on the frequency with which the object OBJ moves at the k-th movement speed in the predetermined period and the frequency with which the object OBJ moves at the m-th movement speed in the predetermined period. More specifically, the ratio of the total areal size of the k-th partial structure surface 131-k and the total areal size of the m-th partial structure surface 131-m may be set based on the ratio of the frequency with which the object OBJ moves at the k-th movement speed in the predetermined period and the frequency with which the object OBJ moves at the m-th movement speed in the predetermined period. As one example, the total areal size of the k-th partial structure surface 131-k and the total areal size of the m-th partial structure surface 131-m may be set so that the ratio of the total areal size of the k-th partial structure surface 131-k and the total areal size of the m-th partial structure surface 131-m is equal to or is proportional to the ratio of the frequency with which the object OBJ moves at the k-th movement speed in the predetermined period to the frequency with which the object OBJ moves at the m-th movement speed in the predetermined period. In this case, in a case where the frequency with which the object OBJ moves at the k-th movement speed in the predetermined period is higher than the frequency with which the object OBJ moves at the m-th movement speed in the predetermined period, the total areal size of the k-th partial structure surface 131-k may be larger than the total areal size of the m-th partial structure surface 131-m. On the other hand, in a case where the frequency with which the object OBJ moves at the k-th movement speed in the predetermined period is lower than the frequency with which the object OBJ moves at the m-th movement speed in the predetermined period, the total areal size of the k-th partial structure surface 131-k may be smaller than the total areal size of the m-th partial structure surface 131-m. As a result, the object OBJ to which the riblet sheet 1b is attached can achieve the resistance reduction effect provided by the riblet sheet 1b more effectively.

### (2-3-3) Third Example of Method for Setting Characteristic of Riblet Structure RB Formed on Riblet Sheet 1b (Third Characteristic Setting Method)

According to a third characteristic setting method, the characteristic of the k-th type of riblet structure RB that is formed on the k-th partial structure surface 131-k of the riblet sheet 1b may be set to a k-th characteristic that is suitable for the purpose of reducing the fluid resistance of the object OBJ, which moves under a k-th movement environment. For example, the pitch P_rb of the convex structure 191 that is formed on the k-th partial structure surface 131-k of the riblet sheet 1b may be set to a k-th pitch P_rb that is suitable for the purpose of reducing the fluid resistance of the object OBJ, which moves under the k-th movement environment. For example, the height H_rb of the convex structure 191 that is formed on the k-th partial structure surface 131-k of the riblet sheet 1b may be set to a k-th height H_rb that is suitable for the purpose of reducing the fluid resistance of the object OBJ, which moves under the k-th movement environment. For example, the extension direction of the convex structure 191 that is formed on the k-th partial structure surface 131-k of the riblet sheet 1b may be set to a k-th extension direction that is suitable for the purpose of reducing the fluid resistance of the object OBJ, which moves under a k-th movement environment.

In a case where the third characteristic setting method is used, the object OBJ may be movable under each of a first movement environment, a second movement environment that is different from the first movement environment, ... , and a N-th movement environment that is different from the first to N-1 movement environments. In this case, the characteristic of the first type of riblet structure RB that is formed on the first partial structure surface 131-1 may be set to a first characteristic that is suitable for reducing the fluid resistance of the object OBJ, which moves under the first movement environment. The characteristic of the second type of riblet structure RB that is formed on the second partial structure surface 131-2 may be set to a second characteristic that is suitable for reducing the fluid resistance of the object OBJ, which moves under the second movement environment. The characteristic of the N-th type of riblet structure RB that is formed on the N-th partial structure surface 131-N may be set to a N-th characteristic that is suitable for reducing the fluid resistance of the object OBJ, which moves under the N-th movement environment.

As one example, the object OBJ may be movable at least under each of the first movement environment and the second movement environment. In this case, the characteristic of the first type of riblet structure RB that is formed on the first partial structure surface 131-1 may be set to the first characteristic that is suitable for reducing the fluid resistance of the object OBJ, which moves under the first movement environment. The characteristic of the second type of riblet structure RB that is formed on the second partial structure surface 131-2 may be set to the second characteristic that is suitable for reducing the fluid resistance of the object OBJ, which moves under the second movement environment.

Here, in a case where the riblet sheet 1b on which the first type of riblet structure RB is formed but the second type of riblet structure RB is not formed (namely, which includes the first partial structure surface 131-1 but does not include the second partial structure surface 131-2) is attached to the surface of the object OBJ, there is a possibility that the fluid resistance of the object OBJ, which moves under the first movement environment, is properly reduced but the fluid resistance of the object OBJ, which moves under the second movement environment, is not properly reduced. Similarly, in a case where the riblet sheet 1b on which the second type of riblet structure RB is formed but the first type of riblet structure RB is not formed (namely, which includes the second partial structure surface 131-2 but does not include the first partial structure surface 131-1) is attached to the surface of the object OBJ, there is a possibility that the fluid resistance of the object OBJ, which moves under the second movement environment, is properly reduced but the fluid resistance of the object OBJ, which moves under the first movement environment, is not properly reduced. However, according to the third characteristic setting method, the riblet sheet 1b on which both the first and second types of riblet structures RB are formed (namely, which includes both the first partial structure surface 131-1 and the second partial structure surface 131-2) is attached to the surface of the object OBJ. Therefore, the first type of riblet structure RB properly reduces the flid resistance of the object OBJ, which moves under the first movement environment, and the second type of riblet structure RB properly reduces the fluid resistance of the object OBJ, which moves under the second movement environment. Therefore, in a case where the third characteristic setting method is used, the resistance reduction effect provided by the riblet sheet 1b is properly achievable in a situation where the object OBJ, to which the riblet sheet 1b is attached, moves under various movement environments. Namely, the resistance reduction effect provided by the riblet sheet 1b is properly achievable in a situation where the movement environment of the object OBJ, to which the riblet sheet 1b is attached, changes.

The total areal size of the k-th partial structure surface 131-k, on which the k-th type of riblet structure RB is formed, on the surface of the object OBJ may be set based on a frequency with which the object OBJ moves under the k-th movement environment in a predetermined period. Especially, the total areal size of the k-th partial structure surface 131-k, on which the k-th type of riblet structure RB is formed, on the surface of the object OBJ and the total areal size of the m-th partial structure surface 131-m, on which the m-th type of riblet structure RB is formed, on the surface of the object OBJ may be set based on the frequency with which the object OBJ moves under the k-th movement environment in the predetermined period and a frequency with which the object OBJ moves under the m-th movement environment in the predetermined period. More specifically, the ratio of the total areal size of the k-th partial structure surface 131-k and the total areal size of the m-th partial structure surface 131-m may be set based on a ratio of the frequency with which the object OBJ moves under the k-th movement environment in the predetermined period and the frequency with which the object OBJ moves under the m-th movement environment in the predetermined period. As one example, the total areal size of the k-th partial structure surface 131-k and the total areal size of the m-th partial structure surface 131-m may be set so that the ratio of the total areal size of the k-th partial structure surface 131-k and the total areal size of the m-th partial structure surface 131-m is equal to or is proportional to the ratio of the frequency with which the object OBJ moves under the k-th movement environment in the predetermined period to the frequency with which the object OBJ moves under the m-th movement environment in the predetermined period.

As one example, an example in which the variable number k is 1 and the variable number m is 2 will be described. In this case the total areal size of the first partial structure surface 131-1, on which the first type of riblet structure RB is formed, on the surface of the object OBJ and the total areal size of the second partial structure surface 131-2, on which the second type of riblet structure RB is formed, on the surface of the object OBJ may be set based on the frequency with which the object OBJ moves under the first movement environment in the predetermined period and the frequency with which the object OBJ moves under the second movement environment in the predetermined period. More specifically, the ratio of the total areal size of the first partial structure surface 131-1 and the total areal size of the second partial structure surface 131-2 may be set based on the ratio of the frequency with which the object OBJ moves under the first movement environment in the predetermined period and the frequency with which the object OBJ moves under the second movement environment in the predetermined period.

For example, the total areal size of the first partial structure surface 131-1 and the toral areal size of the second partial structure surface 131-2 may be set so that the ratio of the total areal size of the first partial structure surface 131-1 and the total areal size of the second partial structure surface 131-2 is equal to or is proportional to the ratio of the frequency with which the object OBJ moves under the first movement environment in the predetermined period and the frequency with which the object OBJ moves under the second movement environment in the predetermined period. In this case, in a case where the frequency with which the object OBJ moves under the first movement environment in the predetermined period is higher than the frequency with which the object OBJ moves under the second movement environment in the predetermined period, the total areal size of the first partial structure surface 131-1 may be larger than the total areal size of the second partial structure surface 131-2. As a result, the resistance reduction effect under first movement environment under which the object OBJ moves with a higher frequency is greater than the resistance reduction effect under second movement environment under which the object OBJ moves with a lower frequency, compared to a case where the total areal size of the first partial structure surface 131-1 is smaller than the total areal size of the second partial structure surface 131-2. Therefore, the object OBJ to which the riblet sheet 1b is attached can achieve the resistance reduction effect provided by the riblet sheet 1b more effectively. On the other hand, in a case where the frequency with which the object OBJ moves under the first movement environment in the predetermined period is lower than the frequency with which the object OBJ moves under the second movement environment in the predetermined period, the total areal size of the first partial structure surface 131-1 may be smaller than the total areal size of the second partial structure surface 131-2. As a result, the resistance reduction effect under second movement environment under which the object OBJ moves with a higher frequency is greater than the resistance reduction effect under first movement environment under which the object OBJ moves with a lower frequency, compared to a case where the total areal size of the first partial structure surface 131-1 is larger than the total areal size of the second partial structure surface 131-2 . Therefore, the object OBJ to which the riblet sheet 1b is attached can achieve the resistance reduction effect provided by the riblet sheet 1b more effectively.

Even in the second example embodiment, the movement environment of the object OBJ may include the flow speed of the fluid, as in the first example embodiment. In this case, the characteristic of the k-th type of riblet structure RB that is formed on the k-th partial structure surface 131-k of the riblet sheet 1b may be set to a k-th characteristic that is suitable for the purpose of reducing the resistance of the object OBJ to the fluid flowing at a k-the flow speed. For example, for example, the fluid may flow at each of at least a first flow speed and a second flow speed that is different from the first flow speed. In this case, the characteristic of the first type of riblet structure RB that is formed on the first partial structure surface 131-1 may be set to a first characteristic that is suitable for the purpose of reducing the resistance of the object OBJ to the fluid flowing at the first flow speed. On the other hand, the characteristic of the second type of riblet structure RB that is formed on the second partial structure surface 131-2 may be set to a second characteristic that is suitable for the purpose of reducing the resistance of the object OBJ to the fluid flowing at the second flow speed. As a result, the first type of riblet structure RB properly reduces the fluid resistance of the object OBJ under a movement environment in which the fluid flows at the first flow speed, and the second type of riblet structure RB also properly reduces the fluid resistance of the object OBJ under a movement environment in which the fluid flows at the second flow speed. Therefore, in a case where the third characteristic setting method is used, the object OBJ, to which the riblet sheet 1b is attached, can properly achieve the resistance reduction effect provided by the riblet sheet 1b in a situation where the flow speed of the fluid flowing around the object OBJ, to which the riblet sheet 1b is attached, changes.

In a case where the movement environment of the object OBJ includes the flow speed of the object OBJ, the total areal size of the k-th partial structure surface 131-k, on which the k-th type of riblet structure RB is formed, on the surface of the object OBJ may be set based on the frequency with which the object OBJ moves in the fluid, which flows at a k-th flow speed, in the predetermined period. For example, the total areal size of the k-th partial structure surface 131-k and the total areal size of the m-th partial structure surface 131-m may be set based on the frequency with which the object OBJ moves in the fluid, which flows at a k-th flow speed, in the predetermined period and the frequency with which the object OBJ moves in the fluid, which flows at a m-th flow speed, in the predetermined period. More specifically, the ratio of the total areal size of the k-th partial structure surface 131-k and the total areal size of the m-th partial structure surface 131-m may be set based on the ratio of the frequency with which the object OBJ moves in the fluid, which flows at the k-th flow speed, in the predetermined period and the frequency with which the object OBJ moves in the fluid, which flows at the m-th flow speed, in the predetermined period. As one example, the total areal size of the k-th partial structure surface 131-k and the total areal size of the m-th partial structure surface 131-m may be set so that the ratio of the total areal size of the k-th partial structure surface 131-k and the total areal size of the m-th partial structure surface 131-m is equal to or is proportional to the ratio of the frequency with which the object OBJ moves in the fluid, which flows at the k-th flow speed, in the predetermined period to the frequency with which the object OBJ moves in the fluid, which moves at the m-th flow speed, in the predetermined period. In this case, in a case where the frequency with which the object OBJ moves in the fluid, which moves at the k-th flow speed, in the predetermined period is higher than the frequency with which the object OBJ moves in the fluid, which moves at the m-th flow speed, in the predetermined period, the total areal size of the k-th partial structure surface 131-k may be larger than the total areal size of the m-th partial structure surface 131-m. On the other hand, in a case where the frequency with which the object OBJ moves in the fluid, which moves at the k-th flow speed, in the predetermined period is lower than the frequency with which the object OBJ moves in the fluid, which moves at the m-th flow speed, in the predetermined period, the total areal size of the k-th partial structure surface 131-k may be smaller than the total areal size of the m-th partial structure surface 131-m. As a result, the object OBJ to which the riblet sheet 1b is attached can achieve the resistance reduction effect provided by the riblet sheet 1b more effectively.

### (3) Manufacturing Apparatus for Manufacturing Riblet Sheet 1

Next, a manufacturing apparatus 2 that is configured to manufacture the riblet sheet 1 (namely, at least one of the riblet sheets 1a and 1b) will be described. The manufacturing apparatus 2 may be a processing apparatus 2a that is configured to perform a subtractive manufacturing. The manufacturing apparatus 2 may be an imprint lithography apparatus 2b that is configured to perform an imprint lithography using a mold 3b. Therefore, the processing apparatus 2a and the imprint lithography apparatus 2b, each of which is configured to serve as the manufacturing apparatus 2, will be described sequentially below.

### (3-1) Configuration of Processing Apparatus 2a

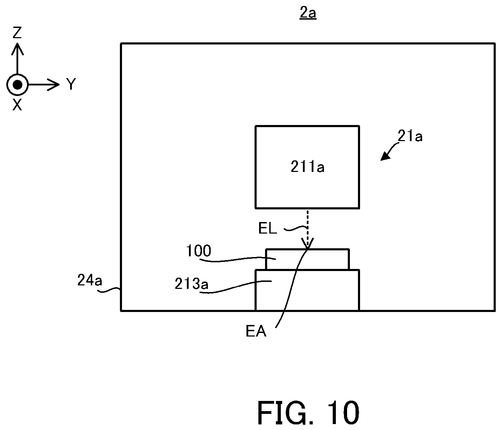

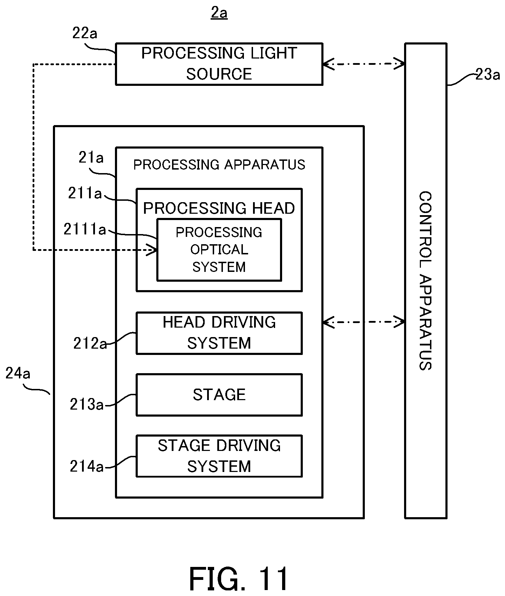

First, with reference to FIG. 10 to FIG. 11, a configuration of the processing apparatus 2a will be described. FIG. 10 is a cross-sectional view that schematically illustrate the configuration of the processing apparatus 2a. FIG. 11 is a system configuration diagram that illustrates a system configuration of the processing apparatus 2a.

As illustrated in FIG. 10 and FIG. 11, the processing apparatus 2a includes a processing apparatus 21a, a processing light source 22a, and a control apparatus 23a. At least a part of the processing apparatus 21a is contained in an internal space of a housing 24a. The internal space of the housing 24a may be purged with purge gas such as nitrogen gas or may not be purged with the purge gas. The internal space of the housing 24a may be evacuated or may not be evacuated. However, the processing apparatus 21a may not be contained in the internal space of the housing 24a. Namely, the processing apparatus 2a may not include the housing 24a that contains the processing apparatus 21a.

The processing apparatus 21a is configured to process a material sheet 100, which is a material of the riblet sheet 1, under the control of the control apparatus 23a. The material sheet 100 includes at least the film layer 12 on which the riblet structure RB is not formed. The material sheet 100 may include the adhesive layer 11 in addition to the film layer 12. The processing apparatus 21a performs the subtractive manufacturing for removing a part of the material sheet 100. The processing apparatus 21a forms the riblet structure RB on the material sheet 100 by performing the subtractive manufacturing. As a result, the riblet sheet 1 on which the riblet structure RB is formed is manufactured.

The processing apparatus 21a irradiates processing light EL onto the material sheet 100 to process the material sheet 100. The processing light EL may be any type of light as long as the material sheet 100 can be processed by irradiating onto the material sheet 100. The processing light EL may include pulsed light (for example, pulsed light whose emission time is equal to or shorter than pico-seconds). Alternatively, the processing light EL may not contain the pulsed light. In other words, the processing light EL may be continuous light. The processing light EL is supplied to the processing apparatus 21a from the processing light source 22a, which generates the processing light EL, through a non-illustrated light transmission member (for example, at least one of an optical fiber and a mirror). The processing apparatus 21a irradiates the processing light EL, which has been supplied from the processing light source 22a, onto the material sheet 100.

In order to process the material sheet 100, the processing apparatus 21a includes a processing head 211a, a head driving system 212a, a stage 213a, and a stage driving system 214a.

The processing head 211a irradiates the processing light EL, which is from the processing light source 22a, onto the material sheet 100. The processing head 211a may condense the processing light EL onto a surface of the material sheet 100, for example. The processing head 211a may control an optical characteristic of the processing light EL, for example. At least one of an intensity of the processing light EL, a temporal variation of the intensity of the processing light EL, a condensed position of the processing light EL, an incident angle of the processing light EL relative to the material sheet 100, a shape of the processing light EL in an optical plane intersecting an optical axis of an processing optical system 111, an intensity distribution of the processing light EL in this optical plane, and the number of pulses of the processing light EL (in a case where the processing light EL is the pulsed light) is one example of the optical characteristic of the processing light EL.

The head driving system 212a moves the processing head 211a along at least one of the X-axis direction, the Y-axis direction, and the Z-axis direction under the control of the control apparatus 23a. Note that the head driving system 212a may move the processing head 211a along at least one of a θX direction, a θY direction, and a θZ direction, in addition to or instead of at least one of the X-axis direction, the Y-axis direction, and the Z-axis direction. When the processing head 211a moves, a positional relationship between the stage 213a (furthermore, the material sheet 100 placed on the stage 213a) and the processing head 211a changes. Furthermore, when the positional relationship between the processing head 211a and each of the stage 213a and the material sheet 100 changes, an irradiation position of the processing light EL on the material sheet 100 changes.

The material sheet 100 is placed on the stage 213a. The stage 213a may not hold the material sheet 100 placed on the stage 213a. Namely, the stage 213a may not apply a holding force, which is for holding the material sheet 100, to the material sheet 100 placed on the stage 213a. Alternatively, the stage 213a may hold the material sheet 100 placed on the stage 213a. Namely, the stage 213a may apply the holding force, which is for holding the material sheet 100, to the material sheet 100 placed on the stage 213a. For example, the stage 213a may hold the material sheet 100 by vacuum suction chucking and / or electrostatic chucking the material sheet 100. Alternatively, a jig for holding the material sheet 100 may hold the material sheet 100, and the stage 213a may hold the jig holding the material sheet 100.

The stage driving system 214a moves the stage 213a under the control of the control apparatus 23a. Specifically, the stage driving system 214a moves the stage 213a relative to the processing head 211a. For example, the stage driving system 214a may move the stage 213a along at least one of the X-axis direction, the Y-axis direction, the Z-axis direction, the θX direction, the θY direction, and the θZ direction under the control of the control apparatus 23a. Note that moving the stage 213a along at least one of the θX direction, the θY direction, and the θZ direction may be considered to be equivalent to rotating (alternatively, rotationally moving) the stage 213a around at least one of the X-axis, the Y-axis, and the Z-axis. When the stage 213a moves, the positional relationship between the stage 213a (furthermore, the material sheet 100 placed on the stage 213a) and the processing head 211a changes. Furthermore, when the positional relationship between the processing head 211a and each of the stage 213a and the material sheet 100 changes, the irradiation position of the processing light EL on the material sheet 100 changes.

The control apparatus 23a controls an operation of the processing apparatus 2a. For example, the control apparatus 23a may generate processing control information for processing the material sheet 100 and control the processing apparatus 21a based on the generated processing control information so that the material sheet 100 is processed based on the generated processing control information. Namely, the control apparatus 23a may control the processing of the material sheet 100.

The control apparatus 23a may include a calculation apparatus and a storage apparatus, for example. The calculation apparatus may include at least one of a CPU (Central Processing Unit) and a GPU (Graphics Processing Unit), for example. The control apparatus 23a serves as an apparatus for controlling the operation of the processing apparatus 2a by means of the calculation apparatus executing a computer program. The computer program is a computer program that allows the calculation apparatus to execute (namely, to perform) a below-described operation that should be executed by the control apparatus 23a (namely, the calculation apparatus). Namely, the computer program is a computer program that allows the control apparatus 23a to function so as to make the processing apparatus 2a perform the below-described operation. The computer program executed by the calculation apparatus may be recorded in the storage apparatus (namely, a recording medium) of the control apparatus 23a, or may be recorded in any recording medium (for example, a hard disk or a semiconductor memory) that is built in the control apparatus 23a or that is attachable to the control apparatus 23a. Alternatively, the calculation apparatus may download the computer program that should be executed from an apparatus external to the control apparatus 23a through a network interface.

### (3-2) Configuration of Imprint Lithography Apparatus 2b

### (3-2-1) Configuration of First Imprint Lithography Apparatus 2b#1

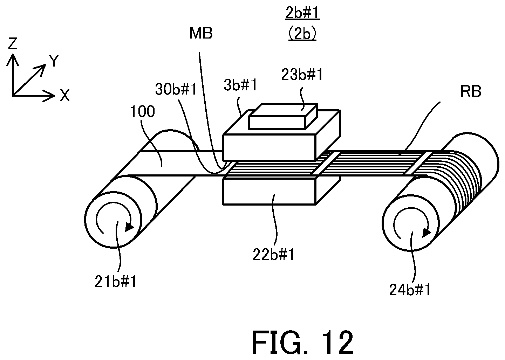

First, with reference to FIG. 12, a first imprint lithography apparatus 2b#1 will be described. FIG. 12 is a perspective view that schematically illustrates a configuration of the first imprint lithography apparatus 2b#1.

As illustrated in FIG. 12, the first imprint lithography apparatus 2b#1 includes a flat plate mold 3b#1 that is one example of the mold 3b, a feed roller 21b#1, a table 22b#1, a heater 23b#1, and a collection roller (winding roller) 24b#1.

The flat plate mold 3b#1 is the mold 3b whose shape is a flat shape. Specifically, the flat plate mold 3b#1 is a flat-shaped member whose molding surface 30b#1 is a flat surface. The molding surface 30b#1 is a surface on which a mold structure MB is formed. The mold structure MB is a structure for transferring the riblet structure RB to the material sheet 100. The first imprint lithography apparatus 2b#1 may transfer (namely, form) the riblet structure RB to the surface of the material sheet 100 by pressing the molding surface 30b#1 against the material sheet 100.

The feed roller 21b#1 is a cylindrical member to which the material sheet 100 is wound. The material sheet 100 is a sheet-shaped member extending along a longitudinal direction, as with the riblet sheet 1. The feed roller 21b#1 rotates around a central axis to sequentially supply the material sheet 100 to the table 22b#1. Then, the mold structure MB formed on the molding surface 30b#1 of the flat plate mold 3b#1 is pressed against the material sheet 100 supplied to the table 22b#1. As a result, the riblet structure RB corresponding to the mold structure MB is transferred to the material sheet 100. Note that the table 22b#1 may heat the material sheet 100 to facilitate the transfer of the riblet structure RB to the material sheet 100. Namely, the table 22b#1 may soften the material sheet 100 by heating the material sheet 100. Each time the riblet structure RB is transferred to the material sheet 100, the collection roller 24b#1 rotates around a central axis to collects (in other words, wind) the material sheet 100 to which the riblet structure RB has been transferred. As a result, the material sheet 100 to which the riblet structure RB has been transferred is wound to the collection roller 24b#1. Furthermore, while the collection roller 24b#1 collects the material sheet 100, the feed roller 21b#1 supplies new material sheet 100 to the table 22b#1.

The first imprint lithography apparatus 2b#1 alternately repeats a pressing of the flat plate mold 3b#1 against the material sheet 100 and a supply and collection of the material sheet 100. For example, the first imprint lithography apparatus 2b#1 may supply a first part of the material sheet 100 to the table 22b#1 by using the feed roller 21b#1. Then, the first imprint lithography apparatus 2b#1 may press the mold structure MB formed on the molding surface 30b#1 of the flat plate mold 3b#1 against the first part of the material sheet 100 supplied to the table 22b#1. As a result, the riblet structure RB corresponding to the mold structure MB is transferred to the first part of the material sheet 100. Then, the first imprint lithography apparatus 2b#1 may collect the first part of the material sheet 100, to which the riblet structure RB has been transferred, transferred, by using the collection roller 24b#1, and simultaneously feed a second part of the material sheet 100, which is adjacent to the first part along the longitudinal direction, to the table 22b#1 by using the feed roller 21b#1. Then, the first imprint lithography apparatus 2b#1 may press the mold structure MB formed on the molding surface 30b#1 of the flat plate mold 3b#1 against the second part of the material sheet 100 supplied to the table 22b#1. As a result, the riblet structure RB corresponding to the mold structure MB is transferred to the second part of the material sheet 100. Then, the first imprint lithography apparatus 2b#1 may repeat the same operation. As a result, the riblet structure RB is formed on the material sheet 100 extending along the longitudinal direction (the X-axis direction in the example illustrated in FIG. 12). Namely, the riblet sheet 1 extending along the longitudinal direction (the X-axis direction in the example illustrated in FIG. 12) is manufactured.

Note that the first imprint lithography apparatus 2b#1 transfers the riblet structure RB to the material sheet 100 by pressing the flat plate mold 3b#1 against the material sheet 100 to deform the material sheet 100 in the above-described example. However, the first imprint lithography apparatus 2b#1 may form the riblet structure RB by coating the material sheet 100 with a light-curable resin and irradiating the light-curable resin with curing light while pressing the flat plate mold 3b#1 against the coated light-curable resin.

### (3-2-2) Configuration of First Imprint Lithography Apparatus 2b#2

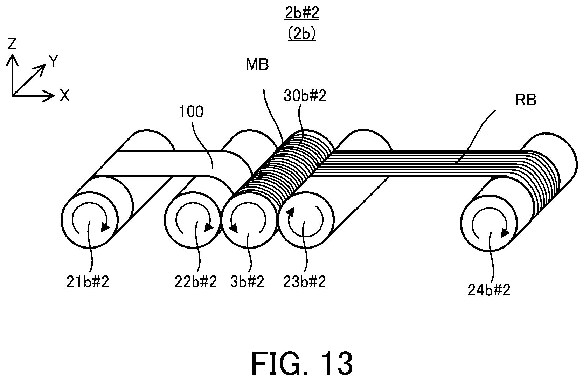

Next, with reference to FIG. 13, a second imprint lithography apparatus 2b#2 will be described. FIG. 13 is a perspective view that schematically illustrates a configuration of the second imprint lithography apparatus 2b#2.

As illustrated in FIG. 13, the second imprint lithography apparatus 2b#2 includes a roller mold 3b#2 that is one example of the mold 3b, a feed roller 21b#2, an auxiliary roller 22b#2, an auxiliary roller 23b#2, and a collection roller (winding roller) 24b#2.

The roller mold 3b#2 is the mold 3 whose shape is a cylindrical shape. Specifically, the roller mold 3b#2 is a cylindrical member that is configured to serve as a roller rotatable around a central axis. In this case a curved outer surface (namely, a side surface) of the cylindrical member is used as a molding surface 30b#2 of the roller mold 3b#2. Therefore, the mold structure MB is formed on the curved outer surface of the cylindrical member that is used as the roller mold 3b#2.

The feed roller 21b#2 is a cylindrical member to which material sheet 100 is wound. The feed roller 21b#2 rotates around a central axis to sequentially supply the material sheet 100. The material sheet 100, which has been supplied by the feed roller 21b#2, is conveyed to the collection roller 24b#2 by the auxiliary rollers 22b#2 and 23b#2, each of which is rotatable around a central axis. Here, the roller mold 3b#2 is pressed against the surface of the material sheet 100 conveyed by the auxiliary rollers 22b#2 and 23b#2. More specifically, the material sheet 100 conveyed by the auxiliary rollers 22b#2 and 23b#2 is sandwiched between the roller mold 3b#2 and each of the auxiliary rollers 22b#2 and 23b#2, and the mold structure MB formed on the molding surface 30b#2 of the roller mold 3b#2 is pressed against the surface of the material sheet 100 at this timing. As a result, the riblet structure RB corresponding to the mold structure MB is transferred to the material sheet 100. Note that at least one of the auxiliary rollers 22b#2 and 23b#2 may heat the material sheet 100 to facilitate the transfer of the riblet structure RB to the material sheet 100. Namely, at least one of the auxiliary rollers 22b#2 and 23b#2 may soften the material sheet 100 by heating the material sheet 100. The material sheet 100 on which the riblet structure RB has been transferred is collected (namely, wound) by the collection roller 24b#2 that is rotatable around a central axis. Namely, the material sheet 100 on which the riblet structure RB has been transferred is wound to the collection roller 24b#2.

Note that the second imprint lithography apparatus 2b#2 transfers the riblet structure RB to the material sheet 100 by pressing the roller plate mold 3b#2 against the material sheet 100 to deform the material sheet 100 in the above-described example. However, the second imprint lithography apparatus 2b#2 may form the riblet structure RB by coating the material sheet 100 with a light-curable resin and irradiating the light-curable resin with curing light while pressing the roller mold 3b#2 against the coated light-curable resin.

### (4) Modified Example

In the above-described description, the riblet structure RB includes the plurality of convex structures 191 each of which extends along the predetermined extension direction. However, the riblet structure RB may include a plurality of convex structures each of which does not extend along the predetermined extension direction, in addition to or instead of the convex structure 191. For example, the riblet structure RB may include a plurality of convex structures each of which has a cylindrical shape or a prismatic shape. For example, the riblet structure RB may include a plurality of convex structures each of which has a conical shape or a pyramidal shape.

In a case where the riblet structure RB includes the plurality of convex structures each of which does not extend along the predetermined extension direction, the plurality of convex structures may include at least two convex structures arranged along any direction along the XY plane. Especially, the plurality of convex structures may include at least two convex structures arranged along any first direction along the XY plane, and may also include at least two convex structures arranged along any second direction that is along the XY plane and that is different from the first direction. For example, the plurality of convex structures may include at least two convex structures arranged along the X-axis direction and at least two convex structures arranged along the Y-axis direction. For example, the plurality of convex structures may include a plurality of convex structures arranged in a matrix pattern.

In the above-described description, the riblet structure RB is formed on the riblet sheet 1 (namely, at least one of riblet sheets 1a and 1b). However, any structure having any shape may be formed on the riblet sheet 1, in addition to or instead of the riblet structure RB. Any structure having any shape may be formed on the riblet sheet 1 as an alternative structural object of the riblet structure RB. A structure that generates a swirl relative to a flow of the fluid on the surface of the object OBJ to which the riblet sheet 1 is attached is one example of any structure. A structure that provides hydrophobic property to the surface of the object OBJ to which the riblet sheet 1 is attached is one example of any structure. A fine texture structure (typically, a concave and convex structure including a land structure and a groove structure) that is formed regularly or irregularly in a micro / nano-meter order is one example of any structure. The fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improves an adherence to a layer formed on a surface, a concave and convex structure for reducing a friction resistance, and so on. The fine texture structure may include a concave and convex structure and so on having a soundproofing function, a sound-absorbing function, a noise-canceling function or the like.

Even in this case, the plurality of riblet sheets 1a, on which the plurality of types of structures having different characteristics are formed, respectively, may be attached to the surface of the object OBJ, as described in the first example embodiment. The plurality of types of structures having different characteristics are formed, respectively may be formed on the single riblet sheet 1b, as described in the second example embodiment..

### (5) Supplementary Note

Regarding the above-described example embodiment, below described Supplementary notes are further disclosed.

### [Supplementary Note 1]

A movable body that is movable in fluid, wherein
a surface of the movable body includes:
a first surface to which a first sheet member, on which a first riblet structure is formed, is attached; and
a second surface to which a second sheet member, on which a second riblet structure is formed, is attached, and
a characteristic of the first riblet structure is different from a characteristic of the second riblet structure.

### [Supplementary Note 2]

The movable body according to the Supplementary Note 1, wherein
the characteristic of the first riblet structure is set to a first characteristic that is suitable for a purpose of reducing a resistance of the first surface to the fluid, and
the characteristic of the second riblet structure is set to a second characteristic that is suitable for a purpose of reducing a resistance of the second surface to the fluid.

### [Supplementary Note 3]

The movable body according to the Supplementary Note 1 or 2, wherein
the movable body is movable in at least one of a first movement aspect and a second movement aspect,
the characteristic of the first riblet structure is set to a third characteristic that is suitable for a purpose of reducing a resistance of the movable body, which moves in the first movement aspect, to the fluid, and
the characteristic of the second riblet structure is set to a fourth characteristic that is suitable for a purpose of reducing a resistance of the movable body, which moves in the second movement aspect different from the first movement aspect, to the fluid.

### [Supplementary Note 4]

The movable body according to the Supplementary Note 3, wherein
each of the first and second movement aspects includes a movement speed of the movable body.

### [Supplementary Note 5]

The movable body according to the Supplementary Note 3 or 4, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

### [Supplementary Note 6]

The movable body according to the Supplementary Note 5, wherein
at least one first sheet member is attached to the first surface,
at least one second sheet member is attached to the second surface, and
a total areal size of the first surface on the surface of the movable body is larger than a total areal size of the second surface on the surface of the movable body.

### [Supplementary Note 7]

The movable body according to any one of the Supplementary Notes 3 to 6, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves in the first movement aspect and a frequency with which the movable body moves in the second movement aspect.

### [Supplementary Note 8]

The movable body according to any one of the Supplementary Notes 3 to 7, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves in the first movement aspect and a frequency with which the movable body moves in the second movement aspect.

### [Supplementary Note 9]

The movable body according to any one of the Supplementary Notes 1 to 8, wherein
the characteristic of the first riblet structure is set to a fifth characteristic that is suitable for a purpose of reducing a resistance of the movable body, which moves under a first movement environment, to the fluid, and
the characteristic of the second riblet structure is set to a sixth characteristic that is suitable for a purpose of reducing a resistance of the movable body, which moves under a second movement environment different from the first movement environment, to the fluid.

### [Supplementary Note 10]

The movable body according to the Supplementary Note 9, wherein
each of the first and second movement environments includes a flow speed of the fluid.

### [Supplementary Note 11]

The movable body according to the Supplementary Note 9 or 10, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

### [Supplementary Note 12]

The movable body according to the Supplementary Note 11, wherein
at least one first sheet member is attached to the first surface,
at least one second sheet member is attached to the second surface, and
a total areal size of the first surface on the surface of the movable body is larger than a total areal size of the second surface on the surface of the movable body.

### [Supplementary Note 13]

The movable body according to any one of the Supplementary Notes 9 to 12, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves under the first movement environment and a frequency with which the movable body moves under the second movement environment.

### [Supplementary Note 14]

The movable body according to any one of the Supplementary Notes 9 to 13, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves under the first movement environment and a frequency with which the movable body moves under the second movement environment.

### [Supplementary Note 15]

The movable body according to any one of the Supplementary Notes 1 to 14, wherein
the first riblet structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second riblet structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

### [Supplementary Note 16]

The movable body according to the Supplementary Note 15, wherein
the characteristic of the first riblet structure includes at least one of a pitch of the plurality of first convex structures, a height of each of the plurality of first convex structures, and a direction along which each of the plurality of first convex structures extends, and
the characteristic of the second riblet structure includes at least one of a pitch of the plurality of second convex structures, a height of each of the plurality of second convex structures, and a direction along which each of the plurality of second convex structures extends.

### [Supplementary Note 17]

The movable body according to the Supplementary Note 15 or 16, wherein
a pitch of the plurality of first convex structures is different from a pitch of the plurality of second convex structures.

### [Supplementary Note 18]

The movable body according to any one of the Supplementary Notes 15 to 17, wherein
a height of each of the plurality of first convex structures is different from a height of each of the plurality of second convex structures.

### [Supplementary Note 19]

The movable body according to any one of the Supplementary Notes 15 to 18, wherein
a direction along which each of the plurality of first convex structures extends is different from a direction along which each of the plurality of second convex structures extends.

### [Supplementary Note 20]

The movable body according to any one of the Supplementary Notes 1 to 19, wherein
a shape of the first sheet member is different from a shape of the second sheet member.

### [Supplementary Note 21]

A sheet member, wherein
a surface of the sheet member includes:
a first surface on which a first riblet structure is formed; and
a second surface on which a second riblet structure is formed, and
a characteristic of the first riblet structure is different from a characteristic of the second riblet structure.

### [Supplementary Note 22]

The sheet member according to the Supplementary Note 21, wherein
the sheet member is attachable to at least a part of a surface of a movable body that is movable in fluid,
the characteristic of the first riblet structure is set to a first characteristic that is suitable for a purpose of reducing a resistance of a first surface of the surface of the movable body to the fluid, and
the characteristic of the second riblet structure is set to a second characteristic that is suitable for a purpose of reducing a resistance of a second surface of the surface of the movable body to the fluid.

### [Supplementary Note 23]

The sheet member according to the Supplementary Note 21 or 22, wherein
the sheet member is attachable to at least a part of a surface of a movable body that is movable in a fluid in at least one of a first movement aspect and a second movement aspect,
the characteristic of the first riblet structure is set to a third characteristic that is suitable for a purpose of reducing a resistance of the movable body, which moves in the first movement aspect, to the fluid, and
the characteristic of the second riblet structure is set to a fourth characteristic that is suitable for a purpose of reducing a resistance of the movable body, which moves in the second movement aspect different from the first movement aspect, to the fluid.

### [Supplementary Note 24]

The sheet member according to the Supplementary Note 23, wherein
each of the first and second movement aspects includes a movement speed of the movable body.

### [Supplementary Note 25]

The sheet member according to the Supplementary Note 23 or 24, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

### [Supplementary Note 26]

The sheet member according to the Supplementary Note 25, wherein
a total areal size of the first surface on the surface of the sheet member is larger than a total areal size of the second surface on the surface of the sheet member.

### [Supplementary Note 27]

The sheet member according to any one of the Supplementary Notes 23 to 26, wherein
a total areal size of the first surface on the surface of the sheet member and a total areal size of the second surface on the surface of the sheet member are set based on a frequency with which the movable body moves in the first movement aspect and a frequency with which the movable body moves in the second movement aspect.

### [Supplementary Note 28]

The sheet member according to any one of the Supplementary Notes 23 to 27, wherein
a ratio of a total areal size of the first surface on the surface of the sheet member and a total areal size of the second surface on the surface of the sheet member are set based on a frequency with which the movable body moves in the first movement aspect and a frequency with which the movable body moves in the second movement aspect.

### [Supplementary Note 29]

The sheet member according to any one of the Supplementary Notes 21 to 28, wherein
the sheet member is attachable to at least a part of a surface of a movable body movable in fluid,
the characteristic of the first riblet structure is set to a fifth characteristic that is suitable for a purpose of reducing a resistance of the movable body, which moves under a first movement environment, to the fluid, and
the characteristic of the second riblet structure is set to a sixth characteristic that is suitable for a purpose of reducing a resistance of the movable body, which moves under a second movement environment different from the first movement environment, to the fluid.

### [Supplementary Note 30]

The sheet member according to the Supplementary Note 29, wherein
each of the first and second movement environments includes a flow speed of the fluid.

### [Supplementary Note 31]

The sheet member according to the Supplementary Note 29 or 30, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

### [Supplementary Note 32]

The sheet member according to the Supplementary Note 31, wherein
a total areal size of the first surface on the surface of the sheet member is larger than a total areal size of the second surface on the surface of the sheet member.

### [Supplementary Note 33]

The sheet member according to any one of the Supplementary Notes 29 to 32, wherein
a total areal size of the first surface on the surface of the sheet member and a total areal size of the second surface on the surface of the sheet member are set based on a frequency with which the movable body moves under the first movement environment and a frequency with which the movable body moves under the second movement environment.

### [Supplementary Note 34]

The sheet member according to any one of the Supplementary Notes 29 to 33, wherein
a ratio between a total areal size of the first surface on the surface of the sheet member and a total areal size of the second surface on the surface of the sheet member is set based on a ratio between a frequency with which the movable body moves under the first movement environment and a frequency with which the movable body moves under the second movement environment.

### [Supplementary Note 35]

The sheet member according to any one of the Supplementary Notes 21 to 34, wherein
the first riblet structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second riblet structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

### [Supplementary Note 36]

The sheet member according to the Supplementary Note 35, wherein
the characteristic of the first riblet structure includes at least one of a pitch of the plurality of first convex structures, a height of each of the plurality of first convex structures, and a direction along which each of the plurality of first convex structures extends, and
the characteristic of the second riblet structure includes at least one of a pitch of the plurality of second convex structures, a height of each of the plurality of second convex structures, and a direction along which each of the plurality of second convex structures extends.

### [Supplementary Note 37]

The sheet member according to the Supplementary Note 35 or 36, wherein
a pitch of the plurality of first convex structures is different from a pitch of the plurality of second convex structures.

### [Supplementary Note 38]

The sheet member according to any one of the Supplementary Notes 35 to 37, wherein
a height of each of the plurality of first convex structures is different from a height of each of the plurality of second convex structures.

### [Supplementary Note 39]

The sheet member according to any one of the Supplementary Notes 35 to 38, wherein
a direction along which each of the plurality of first convex structures extends is different from a direction in which each of the plurality of second convex structures extends.

### [Supplementary Note 40]

The sheet member according to any one of the Supplementary Notes 21 to 39, wherein
a shape of the first surface is different from a shape of the second surface.

### [Supplementary Note 41]

The sheet member according to any one of the Supplementary Notes 21 to 40, wherein
the surface of the sheet member includes: a plurality of first surfaces and a plurality of second surfaces, and
the plurality of first surfaces and the plurality of second surfaces are arranged in a periodic or random arrangement pattern.

### [Supplementary Note 42]

The sheet member according to the Supplementary Note 41, wherein
each of the plurality of first surfaces and the plurality of second surfaces has a shape whose longitudinal direction is a seventh direction along the surface of the sheet member, and
the periodic arrangement pattern includes a striped pattern in which the first surfaces and the second surfaces are alternately arranged along an eighth direction that is along the surface of the sheet member and that intersects the seventh direction.

### [Supplementary Note 43]

The sheet member according to the Supplementary Note 42, wherein
the sheet member is attachable to at least a part of a surface of a movable body that is movable in fluid, and
the seventh direction is along a direction along which the fluid flows on the surface of the movable body.

### [Supplementary Note 44]

The sheet member according to any one of the Supplementary Notes 41 to 43, wherein
the periodic arrangement pattern includes a grid pattern in which the first surfaces and the second surfaces are alternately arranged along each of a ninth direction, which is along the surface of the sheet member, and a tenth direction, which is along the surface of the sheet member and which intersects the ninth direction.

### [Supplementary Note 45]

A movable body that is movable in fluid, wherein
the sheet member according to any one of the Supplementary Notes 21 to 44 is attached to at least a part of a surface of the movable body.

### [Supplementary Note 46]

A movable body that is movable in fluid, wherein
a plurality of sheet members according to any one of the Supplementary Notes 21 to 44 are attached to at least a part of a surface of the movable body.

### [Supplementary Note 47]

A manufacturing apparatus for manufacturing the sheet member according to any one of the Supplementary Notes 21 to 44.

### [Supplementary Note 48]

A movable body that is movable in fluid, wherein
a surface of the movable body includes:
a first surface to which a first sheet member, on which a first structure is formed, is attached; and
a second surface to which a second sheet member, on which a second structure is formed, is attached, and
a characteristic of the first structure is different from a characteristic of the second structure.

### [Supplementary Note 49]

The movable body according to the Supplementary Note 48, wherein
the characteristic of the first structure is set to a first characteristic that is suitable for a purpose of reducing a resistance of the first surface to the fluid, and
the characteristic of the second structure is set to a second characteristic that is suitable for a purpose of reducing a resistance of the second surface to the fluid.

### [Supplementary Note 50]

The movable body according to the Supplementary Note 48 or 49, wherein
the movable body is movable in at least one of a first movement aspect and a second movement aspect,
the characteristic of the first structure is set to a third characteristic that is suitable for a purpose of reducing a resistance of the movable body, which moves in the first movement aspect, to the fluid, and
the characteristic of the second structure is set to a fourth characteristic that is suitable for a purpose of reducing a resistance of the movable body, which moves in the second movement aspect different from the first movement aspect, to the fluid.

### [Supplementary Note 51]

The movable body according to the Supplementary Note 50, wherein
each of the first and second movement aspects includes a movement speed of the movable body.

### [Supplementary Note 52]

The movable body according to the Supplementary Note 50 or 51, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

### [Supplementary Note 53]

The movable body according to the Supplementary Note 52, wherein
at least one first sheet member is attached to the first surface,
at least one second sheet member is attached to the second surface, and
a total areal size of the first surface on the surface of the movable body is larger than a total areal size of the second surface on the surface of the movable body.

### [Supplementary Note 54]

The movable body according to any one of the Supplementary Notes 50 to 53, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves in the first movement aspect and a frequency with which the movable body moves in the second movement aspect.

### [Supplementary Note 55]

The movable body according to any one of the Supplementary Notes 50 to 54, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves in the first movement aspect and a frequency with which the movable body moves in the second movement aspect.

### [Supplementary Note 56]

The movable body according to any one of the Supplementary Notes 48 to 55, wherein
the characteristic of the first structure is set to a fifth characteristic that is suitable for a purpose of reducing a resistance of the movable body, which moves under a first movement environment, to the fluid, and
the characteristic of the second structure is set to a sixth characteristic that is suitable for a purpose of reducing a resistance of the movable body, which moves under a second movement environment different from the first movement environment, to the fluid.

### [Supplementary Note 57]

The movable body according to the Supplementary Note 56, wherein
each of the first and second movement environments includes a flow speed of the fluid.

### [Supplementary Note 58]

The movable body according to the Supplementary Note 56 or 57, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

### [Supplementary Note 59]

The movable body according to the Supplementary Note 58, wherein
at least one first sheet member is attached to the first surface,
at least one second sheet member is attached to the second surface, and
a total areal size of the first surface on the surface of the movable body is larger than a total areal size of the second surface on the surface of the movable body.

### [Supplementary Note 60]

The movable body according to any one of the Supplementary Notes 56 to 59, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves under the first movement environment and a frequency with which the movable body moves under the second movement environment.

### [Supplementary Note 61]

The movable body according to any one of the Supplementary Notes 56 to 60, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves under the first movement environment and a frequency with which the movable body moves under the second movement environment.

### [Supplementary Note 62]

The movable body according to any one of the Supplementary Notes 48 to 61, wherein
the first structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

### [Supplementary Note 63]

The movable body according to the Supplementary Note 62, wherein
the characteristic of the first structure includes at least one of a pitch of the plurality of first convex structures, a height of each of the plurality of first convex structures, and a direction along which each of the plurality of first convex structures extends, and
the characteristic of the second structure includes at least one of a pitch of the plurality of second convex structures, a height of each of the plurality of second convex structures, and a direction along which each of the plurality of second convex structures extends.

### [Supplementary Note 64]

The movable body according to the Supplementary Note 62 or 63, wherein
a pitch of the plurality of first convex structures is different from a pitch of the plurality of second convex structures.

### [Supplementary Note 65]

The movable body according to any one of the Supplementary Notes 62 to 64, wherein
a height of each of the plurality of first convex structures is different from a height of each of the plurality of second convex structures.

### [Supplementary Note 66]

The movable body according to any one of the Supplementary Notes 62 to 65, wherein
a direction along which each of the plurality of first convex structures extends is different from a direction along which each of the plurality of second convex structures extends.

### [Supplementary Note 67]

The movable body according to any one of the Supplementary Notes 48 to 66, wherein
a shape of the first sheet member is different from a shape of the second sheet member.

### [Supplementary Note 68]

A sheet member, wherein
a surface of the sheet member includes:
a first surface on which a first structure is formed; and
a second surface on which a second structure is formed, and
a characteristic of the first structure is different from a characteristic of the second structure.

### [Supplementary Note 69]

The sheet member according to the Supplementary Note 68, wherein
the sheet member is attachable to at least a part of a surface of a movable body that is movable in fluid,
the characteristic of the first structure is set to a first characteristic that is suitable for a purpose of reducing a resistance of a first surface of the surface of the movable body to the fluid, and
the characteristic of the second structure is set to a second characteristic that is suitable for a purpose of reducing a resistance of a second surface of the surface of the movable body to the fluid.

### [Supplementary Note 70]

The sheet member according to the Supplementary Note 68 or 69, wherein
the sheet member is attachable to at least a part of a surface of a movable body that is movable in a fluid in at least one of a first movement aspect and a second movement aspect,
the characteristic of the first structure is set to a third characteristic that is suitable for a purpose of reducing a resistance of the movable body, which moves in the first movement aspect, to the fluid, and
the characteristic of the second structure is set to a fourth characteristic that is suitable for a purpose of reducing a resistance of the movable body, which moves in the second movement aspect different from the first movement aspect, to the fluid.

### [Supplementary Note 71]

The sheet member according to the Supplementary Note 70, wherein
each of the first and second movement aspects includes a movement speed of the movable body.

### [Supplementary Note 72]

The sheet member according to the Supplementary Note 70 or 71, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

### [Supplementary Note 73]

The sheet member according to the Supplementary Note 72, wherein
a total areal size of the first surface on the surface of the sheet member is larger than a total areal size of the second surface on the surface of the sheet member.

### [Supplementary Note 74]

The sheet member according to any one of the Supplementary Notes 70 to 73, wherein
a total areal size of the first surface on the surface of the sheet member and a total areal size of the second surface on the surface of the sheet member are set based on a frequency with which the movable body moves in the first movement aspect and a frequency with which the movable body moves in the second movement aspect.

### [Supplementary Note 75]

The sheet member according to any one of the Supplementary Notes 70 to 74, wherein
a ratio of a total areal size of the first surface on the surface of the sheet member and a total areal size of the second surface on the surface of the sheet member are set based on a frequency with which the movable body moves in the first movement aspect and a frequency with which the movable body moves in the second movement aspect.

### [Supplementary Note 76]

The sheet member according to any one of the Supplementary Notes 68 to 75, wherein
the sheet member is attachable to at least a part of a surface of a movable body movable in fluid,
the characteristic of the first structure is set to a fifth characteristic that is suitable for a purpose of reducing a resistance of the movable body, which moves under a first movement environment, to the fluid, and
the characteristic of the second structure is set to a sixth characteristic that is suitable for a purpose of reducing a resistance of the movable body, which moves under a second movement environment different from the first movement environment, to the fluid.

### [Supplementary Note 77]

The sheet member according to the Supplementary Note 76, wherein
each of the first and second movement environments includes a flow speed of the fluid.

### [Supplementary Note 78]

The sheet member according to the Supplementary Note 76 or 77, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

### [Supplementary Note 79]

The sheet member according to the Supplementary Note 78, wherein
a total areal size of the first surface on the surface of the sheet member is larger than a total areal size of the second surface on the surface of the sheet member.

### [Supplementary Note 80]

The sheet member according to any one of the Supplementary Notes 76 to 79, wherein
a total areal size of the first surface on the surface of the sheet member and a total areal size of the second surface on the surface of the sheet member are set based on a frequency with which the movable body moves under the first movement environment and a frequency with which the movable body moves under the second movement environment.

### [Supplementary Note 81]

The sheet member according to any one of the Supplementary Notes 76 to 80, wherein
a ratio between a total areal size of the first surface on the surface of the sheet member and a total areal size of the second surface on the surface of the sheet member is set based on a ratio between a frequency with which the movable body moves under the first movement environment and a frequency with which the movable body moves under the second movement environment.

### [Supplementary Note 82]

The sheet member according to any one of the Supplementary Notes 68 to 81, wherein
the first structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

### [Supplementary Note 83]

The sheet member according to the Supplementary Note 82, wherein
the characteristic of the first structure includes at least one of a pitch of the plurality of first convex structures, a height of each of the plurality of first convex structures, and a direction along which each of the plurality of first convex structures extends, and
the characteristic of the second structure includes at least one of a pitch of the plurality of second convex structures, a height of each of the plurality of second convex structures, and a direction along which each of the plurality of second convex structures extends.

### [Supplementary Note 84]

The sheet member according to the Supplementary Note 82 or 83, wherein
a pitch of the plurality of first convex structures is different from a pitch of the plurality of second convex structures.

### [Supplementary Note 85]

The sheet member according to any one of the Supplementary Notes 82 to 84, wherein
a height of each of the plurality of first convex structures is different from a height of each of the plurality of second convex structures.

### [Supplementary Note 86]

The sheet member according to any one of the Supplementary Notes 82 to 85, wherein
a direction along which each of the plurality of first convex structures extends is different from a direction in which each of the plurality of second convex structures extends.

### [Supplementary Note 87]

The sheet member according to any one of the Supplementary Notes 68 to 86, wherein
a shape of the first surface is different from a shape of the second surface.

### [Supplementary Note 88]

The sheet member according to any one of the Supplementary Notes 68 to 87, wherein
the surface of the sheet member includes: a plurality of first surfaces and a plurality of second surfaces, and
the plurality of first surfaces and the plurality of second surfaces are arranged in a periodic or random arrangement pattern.

### [Supplementary Note 89]

The sheet member according to the Supplementary Note 88, wherein
each of the plurality of first surfaces and the plurality of second surfaces has a shape whose longitudinal direction is a seventh direction along the surface of the sheet member, and
the periodic arrangement pattern includes a striped pattern in which the first surfaces and the second surfaces are alternately arranged along an eighth direction that is along the surface of the sheet member and that intersects the seventh direction.

### [Supplementary Note 90]

The sheet member according to the Supplementary Note 89, wherein
the sheet member is attachable to at least a part of a surface of a movable body that is movable in fluid, and
the seventh direction is along a direction along which the fluid flows on the surface of the movable body.

### [Supplementary Note 91]

The sheet member according to any one of the Supplementary Notes 88 to 90, wherein
the periodic arrangement pattern includes a grid pattern in which the first surfaces and the second surfaces are alternately arranged along each of a ninth direction, which is along the surface of the sheet member, and a tenth direction, which is along the surface of the sheet member and which intersects the ninth direction.

### [Supplementary Note 92]

A movable body that is movable in fluid, wherein
the sheet member according to any one of the Supplementary Notes 68 to 91 is attached to at least a part of a surface of the movable body.

### [Supplementary Note 93]

A movable body that is movable in fluid, wherein
a plurality of sheet members according to any one of the Supplementary Notes 68 to 91 are attached to at least a part of a surface of the movable body.

### [Supplementary Note 94]

A manufacturing apparatus for manufacturing the sheet member according to any one of the Supplementary Notes 68 to 91.

### [Supplementary Note 95]

A modification method of a movable body that is movable in fluid, wherein
the modification method of the movable body includes:
attaching a first sheet member, on which a first riblet structure is formed, to a first surface of a surface of the movable body; and
attaching a second sheet member, on which a second riblet structure is formed, to a second surface of the surface of the movable body that is different from the first surface,
a characteristic of the first riblet structure is different from a characteristic of the second riblet structure.

### [Supplementary Note 96]

The modification method of the movable body according to the Supplementary Note 95 further including:
determining the characteristic of the first riblet structure of the first sheet member, which is attached to the first surface, based on a movement aspect of the movable body; and
determining the characteristic of the second riblet structure of the second sheet member, which is attached to the second surface, based on the movement aspect of the movable body.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a movable body, a sheet member, and a manufacturing apparatus, which involve such changes, are also intended to be within the technical scope of the present invention.

### Description of Reference Codes

- 1, 1a, 1b: riblet sheet
- 11: adhesive layer
- 12: film layer
- 121: paint layer
- 122: coating layer
- 130: riblet structure surface
- 191: convex structure
- 192: groove structure
- RB: riblet structure
- OBJ: object

## Claims

1. A movable body that is movable in fluid, wherein
a surface of the movable body comprises:
a first surface to which a first sheet member, on which a first riblet structure is formed, is attached; and
a second surface to which a second sheet member, on which a second riblet structure is formed, is attached, and
a characteristic of the first riblet structure is different from a characteristic of the second riblet structure.

2. The movable body according to claim 1, wherein
the characteristic of the first riblet structure is set to a first characteristic that is suitable for a purpose of reducing a resistance of the first surface to the fluid, and
the characteristic of the second riblet structure is set to a second characteristic that is suitable for a purpose of reducing a resistance of the second surface to the fluid.

3. The movable body according to claim 1 or 2, wherein
the movable body is movable in at least one of a first movement aspect and a second movement aspect,
the characteristic of the first riblet structure is set to a third characteristic that is suitable for a purpose of reducing a resistance of the movable body, which moves in the first movement aspect, to the fluid, and
the characteristic of the second riblet structure is set to a fourth characteristic that is suitable for a purpose of reducing a resistance of the movable body, which moves in the second movement aspect different from the first movement aspect, to the fluid.

4. The movable body according to claim 3, wherein
each of the first and second movement aspects includes a movement speed of the movable body.

5. The movable body according to claim 3 or 4, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

6. The movable body according to claim 5, wherein
at least one first sheet member is attached to the first surface,
at least one second sheet member is attached to the second surface, and
a total areal size of the first surface on the surface of the movable body is larger than a total areal size of the second surface on the surface of the movable body.

7. The movable body according to any one of claims 3 to 6, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves in the first movement aspect and a frequency with which the movable body moves in the second movement aspect.

8. The movable body according to any one of claims 3 to 7, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves in the first movement aspect and a frequency with which the movable body moves in the second movement aspect.

9. The movable body according to any one of claims 1 to 8, wherein
the characteristic of the first riblet structure is set to a fifth characteristic that is suitable for a purpose of reducing a resistance of the movable body, which moves under a first movement environment, to the fluid, and
the characteristic of the second riblet structure is set to a sixth characteristic that is suitable for a purpose of reducing a resistance of the movable body, which moves under a second movement environment different from the first movement environment, to the fluid.

10. The movable body according to claim 9, wherein
each of the first and second movement environments includes a flow speed of the fluid.

11. The movable body according to claim 9 or 10, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

12. The movable body according to claim 11, wherein
at least one first sheet member is attached to the first surface,
at least one second sheet member is attached to the second surface, and
a total areal size of the first surface on the surface of the movable body is larger than a total areal size of the second surface on the surface of the movable body.

13. The movable body according to any one of claims 9 to 12, wherein
at least one first sheet member is attached to the first surface,
at least one second sheet member is attached to the second surface, and
a total areal size of the first surface on the surface of the movable body and a total areal size of the second surface on the surface of the movable body are set based on a frequency with which the movable body moves under the first movement environment and a frequency with which the movable body moves under the second movement environment.

14. The movable body according to any one of claims 9 to 13, wherein
at least one first sheet member is attached to the first surface,
at least one second sheet member is attached to the second surface, and
a ratio of a total areal size of the first surface on the surface of the movable body and a total areal size of the second surface on the surface of the movable body are set based on a ratio of a frequency with which the movable body moves under the first movement environment and a frequency with which the movable body moves under the second movement environment.

15. The movable body according to any one of claims 1 to 14, wherein
the first riblet structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second riblet structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

16. The movable body according to claim 15, wherein
the characteristic of the first riblet structure includes at least one of a pitch of the plurality of first convex structures, a height of each of the plurality of first convex structures, and a direction along which each of the plurality of first convex structures extends, and
the characteristic of the second riblet structure includes at least one of a pitch of the plurality of second convex structures, a height of each of the plurality of second convex structures, and a direction along which each of the plurality of second convex structures extends.

17. The movable body according to claim 15 or 16, wherein
a pitch of the plurality of first convex structures is different from a pitch of the plurality of second convex structures.

18. The movable body according to any one of claims 15 to 17, wherein
a height of each of the plurality of first convex structures is different from a height of each of the plurality of second convex structures.

19. The movable body according to any one of claims 15 to 18, wherein
a direction along which each of the plurality of first convex structures extends is different from a direction along which each of the plurality of second convex structures extends.

20. The movable body according to any one of claims 1 to 19, wherein
a shape of the first sheet member is different from a shape of the second sheet member.

21. A sheet member, wherein
a surface of the sheet member comprises:
a first surface on which a first riblet structure is formed; and
a second surface on which a second riblet structure is formed, and
a characteristic of the first riblet structure is different from a characteristic of the second riblet structure.

22. The sheet member according to claim 21, wherein
the sheet member is attachable to at least a part of a surface of a movable body that is movable in fluid,
the characteristic of the first riblet structure is set to a first characteristic that is suitable for a purpose of reducing a resistance of a first surface of the surface of the movable body to the fluid, and
the characteristic of the second riblet structure is set to a second characteristic that is suitable for a purpose of reducing a resistance of a second surface of the surface of the movable body to the fluid.

23. The sheet member according to claim 21 or 22, wherein
the sheet member is attachable to at least a part of a surface of a movable body that is movable in a fluid in at least one of a first movement aspect and a second movement aspect,
the characteristic of the first riblet structure is set to a third characteristic that is suitable for a purpose of reducing a resistance of the movable body, which moves in the first movement aspect, to the fluid, and
the characteristic of the second riblet structure is set to a fourth characteristic that is suitable for a purpose of reducing a resistance of the movable body, which moves in the second movement aspect different from the first movement aspect, to the fluid.

24. The sheet member according to claim 23, wherein
each of the first and second movement aspects includes a movement speed of the movable body.

25. The sheet member according to claim 23 or 24, wherein
the movable body is movable at a first movement speed and a second movement speed,
the third characteristic is set to a characteristic that is suitable for a purpose of reducing the resistance of the movable body, which moves at the first movement speed, to the fluid,
the fourth characteristic is set to a characteristic that is suitable for a purpose of reducing the resistance of the movable body, which moves at the second movement speed, to the fluid, and
a frequency with which the movable body moves at the first movement speed in a first period is higher than a frequency with which the movable body moves at the second movement speed in the first period.

26. The sheet member according to claim 25, wherein
a total areal size of the first surface on the surface of the sheet member is larger than a total areal size of the second surface on the surface of the sheet member.

27. The sheet member according to any one of claims 23 to 26, wherein
a total areal size of the first surface on the surface of the sheet member and a total areal size of the second surface on the surface of the sheet member are set based on a frequency with which the movable body moves in the first movement aspect and a frequency with which the movable body moves in the second movement aspect.

28. The sheet member according to any one of claims 23 to 27, wherein
a ratio of a total areal size of the first surface on the surface of the sheet member and a total areal size of the second surface on the surface of the sheet member are set based on a frequency with which the movable body moves in the first movement aspect and a frequency with which the movable body moves in the second movement aspect.

29. The sheet member according to any one of claims 21 to 28, wherein
the sheet member is attachable to at least a part of a surface of a movable body movable in fluid,
the characteristic of the first riblet structure is set to a fifth characteristic that is suitable for a purpose of reducing a resistance of the movable body, which moves under a first movement environment, to the fluid, and
the characteristic of the second riblet structure is set to a sixth characteristic that is suitable for a purpose of reducing a resistance of the movable body, which moves under a second movement environment different from the first movement environment, to the fluid.

30. The sheet member according to claim 29, wherein
each of the first and second movement environments includes a flow speed of the fluid.

31. The sheet member according to claim 29 or 30, wherein
a flow speed of the fluid includes a first flow speed and a second flow speed,
the fifth characteristic is set to a characteristic that is suitable for a purpose of reducing a resistance of the movable body to the fluid whose flow speed is the first flow speed,
the sixth characteristic is set to a characteristic that is suitable for a purpose of reducing a resistance of the movable body to the fluid whose flow speed is the second flow speed, and
a frequency with which the fluid is at the first flow speed in a second period is higher than a frequency with which the fluid is at the second flow speed in the second period.

32. The sheet member according to claim 31, wherein
a total areal size of the first surface on the surface of the sheet member is larger than a total areal size of the second surface on the surface of the sheet member.

33. The sheet member according to any one of claims 29 to 32, wherein
a total areal size of the first surface on the surface of the sheet member and a total areal size of the second surface on the surface of the sheet member are set based on a frequency with which the movable body moves under the first movement environment and a frequency with which the movable body moves under the second movement environment.

34. The sheet member according to any one of claims 29 to 33, wherein
a ratio between a total areal size of the first surface on the surface of the sheet member and a total areal size of the second surface on the surface of the sheet member is set based on a ratio between a frequency with which the movable body moves under the first movement environment and a frequency with which the movable body moves under the second movement environment.

35. The sheet member according to any one of claims 21 to 34, wherein
the first riblet structure includes a structure in which a plurality of first convex structures, each of which extends along a first direction that is along the first surface and each of which protrudes along a second direction intersecting the first direction, are formed to be arranged along a third direction that is along the first surface and that intersects the first and second directions, and
the second riblet structure includes a structure in which a plurality of second convex structures, each of which extends along a fourth direction that is along the second surface and each of which protrudes along a fifth direction intersecting the fourth direction, are formed to be arranged along a sixth direction that is along the second surface and that intersects the fourth and fifth directions.

36. The sheet member according to claim 35, wherein
the characteristic of the first riblet structure includes at least one of a pitch of the plurality of first convex structures, a height of each of the plurality of first convex structures, and a direction along which each of the plurality of first convex structures extends, and
the characteristic of the second riblet structure includes at least one of a pitch of the plurality of second convex structures, a height of each of the plurality of second convex structures, and a direction along which each of the plurality of second convex structures extends.

37. The sheet member according to claim 35 or 36, wherein
a pitch of the plurality of first convex structures is different from a pitch of the plurality of second convex structures.

38. The sheet member according to any one of claims 35 to 37, wherein
a height of each of the plurality of first convex structures is different from a height of each of the plurality of second convex structures.

39. The sheet member according to any one of claims 35 to 38, wherein
a direction along which each of the plurality of first convex structures extends is different from a direction in which each of the plurality of second convex structures extends.

40. The sheet member according to any one of claims 21 to 39, wherein
a shape of the first surface is different from a shape of the second surface.

41. The sheet member according to any one of claims 21 to 40, wherein
the surface of the sheet member comprises: a plurality of first surfaces and a plurality of second surfaces, and
the plurality of first surfaces and the plurality of second surfaces are arranged in a periodic or random arrangement pattern.

42. The sheet member according to claim 41, wherein
each of the plurality of first surfaces and the plurality of second surfaces has a shape whose longitudinal direction is a seventh direction along the surface of the sheet member, and
the periodic arrangement pattern includes a striped pattern in which the first surfaces and the second surfaces are alternately arranged along an eighth direction that is along the surface of the sheet member and that intersects the seventh direction.

43. The sheet member according to claim 42, wherein
the sheet member is attachable to at least a part of a surface of a movable body that is movable in fluid, and
the seventh direction is along a direction along which the fluid flows on the surface of the movable body.

44. The sheet member according to any one of claims 41 to 43, wherein
the periodic arrangement pattern includes a grid pattern in which the first surfaces and the second surfaces are alternately arranged along each of a ninth direction, which is along the surface of the sheet member, and a tenth direction, which is along the surface of the sheet member and which intersects the ninth direction.

45. A movable body that is movable in fluid, wherein
the sheet member according to any one of claims 21 to 44 is attached to at least a part of a surface of the movable body.

46. A movable body that is movable in fluid, wherein
a plurality of sheet members according to any one of claims 21 to 44 are attached to at least a part of a surface of the movable body.

47. A manufacturing apparatus for manufacturing the sheet member according to any one of claims 21 to 44.
